# EUROPEAN PATENT APPLICATION

(11) **EP 2 110 981 A1**
(43) Date of publication of application: **21.10.2009**
(21) Application number: 08710838.7
(22) Date of filing: 06.02.2008
(51) Int. Cl.: H04L 9/08

(54) **PERSONAL INFORMATION MANAGING DEVICE FOR PREVENTING PERSONAL INFORMATION FORM BEING FALSELY ALTERED AND PREVENTING PERSONAL INFORMATION FROM BEING DENIED**

(30) Priority: 06.02.2007 JP 2007026663
(71) Applicant: NEC Corporation, Minato-ku Tokyo 108-8001 (JP)
(72) Inventor: HATAKEYAMA, Makoto, Minato-ku Tokyo 108-8001 (JP); GOMI, Hidehito, Minato-ku Tokyo 108-8001 (JP)
(74) Representative: Betten & Resch
(86) International application number: PCT/JP2008/051941
(87) International publication number: WO 2008/096783

(57) **Abstract**

Falsification and repudiation of personal information to be transmitted/received for circulation thereof cannot be prevented in a situation in which there is no trusted third party.

A personal information managing device issues a personal information registration certificate corresponding to personal information one to one and sends the issued personal information registration certificate to a service providing device through a user terminal. When personal information is transmitted/received, the user terminal and the service providing device check the relationship between the personal information registration certificate and the personal information, thus the user terminal and the personal information receiving device can confirm whether or not the personal information has been falsified. When the personal information is transmitted/received, the personal information is always encrypted. After the encrypted personal information is transmitted/received, the decryption key is transmitted/received. By using the transmission/reception of the decryption key between the personal information managing device and the service providing device as a personal information reception confirmation message, repudiation of personal information transmission/reception can be prevented.

## Description

### TECHNICAL FIELD

The present invention relates to a personal information managing device, a service providing device, a program, a personal information managing method, a checking method and a personal information checking system, and more particularly, to a personal information managing device, a service providing device, a program, a personal information managing method, a checking method and a personal information checking system capable of preventing personal information from being falsified and preventing transmission/reception of personal information from being repudiated even if there is not trusted third party.

### BACKGROUND ART

Patent Document 1 (Japanese Patent Laid-Open No. 2002-183491) describes an example of related art, an information circulation secure system. As shown in Fig. 27, the information circulation secure system described in Patent Document 1 comprises a user terminal, an electronic document mediation device and a service provider device. The electronic document mediation device comprises an encryption/decryption part, an authentication part, a communication contents storage DB and an access record DB, and the service provider device comprises an encryption/decryption part and an authentication part.

The information circulation secure system having such a configuration operates as follows:
The user terminal and the service provider are connected by an encrypted communication path through the electronic document mediation device, and whenever the service provider sends an electronic document to the user terminal, the electronic document mediation device relays it. Instead of transferring the electronic document received from the service provider to the user terminal, the electronic document mediation device temporarily stores the electronic document in the communication contents storage DB, and sends an electronic document reception notification to the user terminal. After receiving the electronic document reception notification, the user terminal accesses the electronic document. At that time, the electronic document mediation device records the user access in the access record DB. By checking the communication contents stored in the communication contents storage DB against information managed by the user terminal and the service provider, the electronic document mediation device can determine which of the user terminal and the service provider falsified the information. Further, the electronic document mediation device registers the user access with the access record DB to prevent the user from denying that the user has acquired the information.
Patent Document 1 Japanese Patent Laid-Open No. 2002-183491
Non-Patent Document 1: Digital Notarization Authority Co., Ltd.;
   http://www.jnotary.com/service_new/service_new.html
Non-Patent Document 2: Verisign: http://www.verisign.co.jp/mpki/benefits/option/notarizati on.html
Non-Patent Document 3: XML Encryption: W3C Recommendation, "XML Encryption Syntax and Processing", 10 December 2002 http://www.w3.org/TR/xmlenc-core/
Non-Patent Document 4: XML Signature: W3C Recommendation, "XML-Signature Syntax and Processing", 12 February 2002 http://www.w3.org/TR/xmldsig-core/

However, the above described information circulation secure system has the following problems:
A first problem is that in a situation in which a third party is not monitoring the circulation of personal information when personal information is circulated, repudiation of reception of personal information by the service providing device cannot be prevented.

The reason is that a personal information managing device does not have means for confirming that the service providing device has received personal information. In a situation in which a third party monitors circulation of personal information as described in Patent Document 1, the third party identifies the service providing device and the personal information managing device, thus repudiation can be prevented. However, when a third party exists, all of the circulation of personal information can be monitored, but information about transmission/reception of personal information is passed to the third party, therefore many communications are generated, and a communication load increases. Further, if circulation monitoring service by the third party is utilized, costs for using service are generated. Therefore, in order to reduce the load and cost, it is desired that a device, which transmits/receives personal information, monitors circulation thereof.

However, when only the personal information managing device and service providing device exist, the personal information managing device cannot confirm that the service providing device has received personal information. If a confirmation message to inform the personal information managing device that the service providing device has received the personal information is transmitted/received, the personal information managing device can confirm that the service providing device has received the personal information. However, even if the service providing device does not transmit such a confirmation message, the service providing device can acquire and use personal information. Therefore, if the service providing device denies the transmission/reception of personal information, the personal information managing device cannot prevent it.

Third parties for monitoring the circulation of personal information include Digital Notarization Authority Co., Ltd.
(http://www.jnotary.com/service_new/service_new.html, Non-Patent Document 1),
and Verisign
(http://www.verisign.co.jp/mpki/benefits/option/notarizat ion.html, Non-Patent Document 2), which provide electronic notary service. Such third parties for providing electronic notary service receive personal information and the like from an electronic notary service user, and issue a certificate of ensuring the contents of the personal information and the like, thus the user, a provider providing contents to the user and the like confirm that the personal information and the like are correct by the certificate.

A second problem is that in a situation in which a third party is not monitoring the circulation of personal information when personal information is circulated, the personal information managing device and the service providing device cannot confirm that the personal information to be circulated has not been falsified.

The reason is that even if the personal information managing device and the service providing device confirm only a message to be transmitted/received by themselves, they cannot confirm that the communication counterpart has not falsified the information. In a situation in which a third party such as the electronic document mediation device described in Patent Document 1 is monitoring all of the circulation of personal information, which of them has falsified the personal information can be judged.

However, if no third party exists, each of the personal information managing device and the service providing device would confirm the message transmitted/received by themselves, and confirm that the personal information has not been falsified. In this situation, when the service providing device acquired personal information of the user from the personal information managing device, whether or not personal information registered by the user, and personal information sent by the personal information managing device are identical cannot be determined. This is because the service providing device does not have personal information, therefore, there is no information for confirmation of falsification. Even if the personal information managing device has falsified the personal information, the service providing device has no information for confirmation, thus it cannot detect that the personal information has been falsified.

A third problem is that high management costs are generated to manage personal information, and, that many communications are generated in the transmission/reception of personal information, when after transmission/reception of personal information has been completed, the same information is to be acquired again, in order to prevent the generation of such management costs.

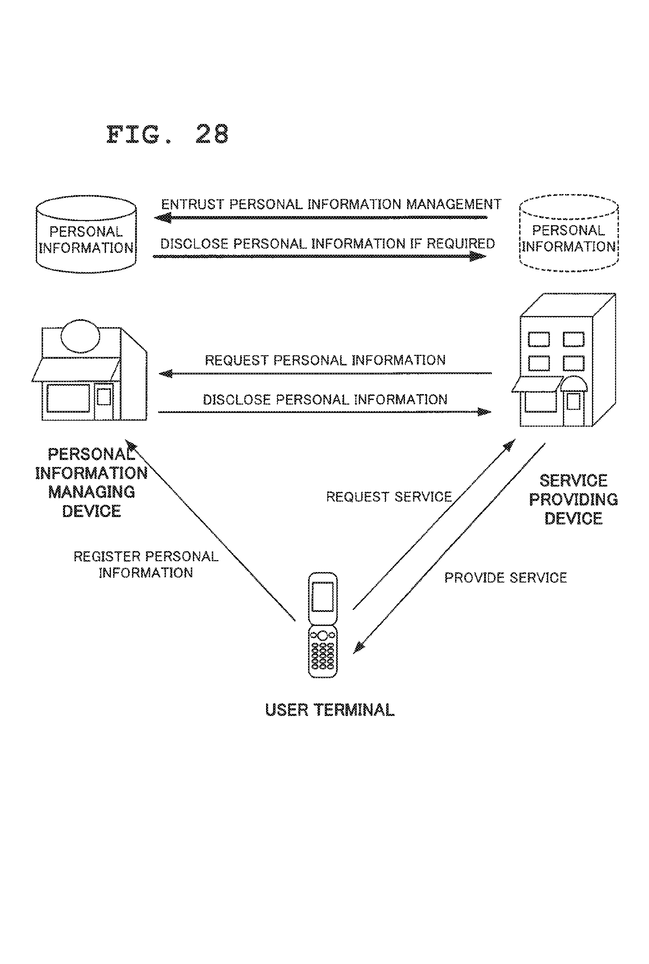

The reason is that even if the transmission/reception of the personal information has been successfully completed once, successfully completed status is not shared between the personal information managing device and the service providing device. For example, as shown in Fig. 28, when personal information is collectively managed by the personal information managing device in one location, and the service providing device itself does not manage personal information, the service providing device requests personal information from the personal information managing device every time the service providing device uses personal information. In this example, the service providing device does not possess or manage personal information by itself. In order to manage personal information, special processes for managing personal information are needed, such as information leakage prevention measures and compliance to Personal Information Protection Act, which generates management costs therefor. Thus, in order to eliminate such costs, instead of holding as-is the personal information the service providing device has acquired once, the service providing device requests the same personal information from the personal information managing device many times.

Since these devices repeat the same communication many times, simplified communication is needed, but, when requesting personal information, the service providing device has not confirmed that the transmission/reception of the personal information has been successfully completed. Therefore, when the personal information is transmitted/received again, processing to confirm that the information has not been falsified, and that falsification has not been prevented is performed again, generating many times the same communication for confirmation about the circulation of personal information.

A fourth problem is that in a situation in which a third party is not monitoring the circulation of personal information when personal information is circulated, a fact that personal information is being circulated correctly cannot be confirmed with any timing.

The reason is that a fact that the personal information has been circulated correctly without being falsified, or without repudiation of transmission/reception cannot be confirmed through confirmation of a message transmitted/received by a communication counterpart. In a situation in which a third party is monitoring circulation of personal information, all information is held by the third party, therefore, by referring to the information, a fact that information has been circulated correctly can be confirmed at any time. Further, when personal information is transmitted/received, what information was transmitted/received can be confirmed by oneself. However, when the transmission/reception of the personal information has been completed, only a communication log of oneself is left. Similarly to the first problem, the contents processed by the communication counterpart cannot be confirmed through only its own log, therefore, there is no information of the communication counterpart indicating that the transmission/reception of the information has been performed correctly. Accordingly, information sent by the counterpart cannot be confirmed.

### (EXEMPLARY OBJECT OF THE INVENTION)

An exemplary object of the present invention is to provide a personal information checking system for preventing the service providing device from denying that it has received personal information in a situation in which a fair third party does not notarize the transmission/reception of personal information, when the service providing device receives the information transmitted by the personal information managing device.

Another exemplary object of the present invention is to provide a personal information checking system capable of detecting falsification, even in a situation in which a fair third party does not notarize the circulation of personal information, when the personal information managing device and the service providing device transmit/receive personal information, if the personal information to be transmitted/received has been falsified.

Still another exemplary object of the present invention is to provide a personal information checking system capable of simplifying processing in which the personal information managing device and the service providing device confirm that personal information has not be falsified, and the fact of transmission/reception is not repudiated, in a situation in which the same personal information is transmitted/received many times.

Still another exemplary object is to provide a personal information checking system in which the personal information managing device and the service providing device can confirm with any timing that personal information has been transmitted/received without being falsified, and there is no repudiation of the transmission/reception of the personal information.

### SUMMARY

According to an exemplary aspect of the invention, a personal information managing device, comprises
a unit for registering personal information acquired from a user device of a user using service provided by a service providing device through a communication line,
a unit for generating irreversible message information containing the personal information registered,
a unit for encrypting the message information,
a unit for generating a decryption key for decrypting the message information encrypted,
a unit for sending the message information encrypted, to the service providing device in accordance with a request for the personal information from the service providing device, and
a unit for sending the decryption key to the service providing device in accordance with a request for the decryption key of the message information received from the service providing device.

According to an exemplary aspect of the invention, a service providing device for providing service to a user through a communication line, comprises
a unit for sending a request for personal information of the user to a personal information managing device for managing personal information of the user,
a unit for acquiring from the personal information managing device, irreversible message information, which is generated by the personal information managing device, and includes the personal information encrypted,
a unit for sending a request for a decryption key for decrypting the encrypted personal information acquired, to the personal information managing device, and
a unit for acquiring the personal information for checking the user using service by decrypting the message information encrypted, based on the decryption key received from the personal information managing device.

According to an exemplary aspect of the invention, a program implemented in a computer, and executed on a personal information managing device for managing personal information, causing
the computer to perform:
processing of registering personal information acquired from a user device of a user using service provided by a service providing device through a communication line;
processing of generating irreversible message information containing the personal information registered;
processing of encrypting the message information;
processing of generating a decryption key for decrypting the message information encrypted;
processing of sending the message information encrypted, to the service providing device in accordance with a request for the personal information from the service providing device; and
processing of sending the decryption key to the service providing device in accordance with a request for the decryption key of the message information received from the service providing device.

According to an exemplary aspect of the invention, a program implemented in a computer, and executed on a service providing device for providing service to a user through a communication line, causing
the computer to perform:
processing of sending a request for personal information of the user to a personal information managing device for managing personal information of the user;
processing of acquiring from the personal information managing device, irreversible message information, which is generated by the personal information managing device, and includes the personal information encrypted;
processing of sending a request for a decryption key for decrypting the encrypted personal information acquired, to the personal information managing device; and
processing of acquiring the personal information for checking the user using service by decrypting the message information encrypted, based on the decryption key received from the personal information managing device.

According to an exemplary aspect of the invention, a personal information managing method for managing personal information on a personal information managing device, comprising:
a step of registering personal information acquired from a user device of a user using service provided by a service providing device through a communication line;
a step of generating irreversible message information containing the personal information registered;
a step of encrypting the message information;
a step of generating a decryption key for decrypting the message information encrypted;
a step of sending the message information encrypted, to the service providing device in accordance with a request for the personal information from the service providing device; and
a step of sending the decryption key to the service providing device in accordance with a request for the decryption key of the message information received from the service providing device.

According to an exemplary aspect of the invention, a checking method of personal information of a user executed on a service providing device for providing service to the user through a communication line, comprising:
a step of sending a request for personal information of the user to a personal information managing device for managing personal information of the user;
a step of acquiring from the personal information managing device, irreversible message information, which is generated by the personal information managing device, and includes the personal information encrypted;
a step of sending a request for a decryption key for decrypting the encrypted personal information acquired, to the personal information managing device; and
a step of acquiring the personal information for checking the user using service by decrypting the message information encrypted, based on the decryption key received from the personal information managing device.

According to an exemplary aspect of the invention, a checking method, wherein
a personal information managing device for managing personal information, comprising:
a step of registering personal information acquired from a user device of a user using service provided by a service providing device through a communication line;
a step of generating irreversible message information containing the personal information registered;
a step of encrypting the message information;
a step of generating a decryption key for decrypting the message information encrypted;
a step of sending the message information encrypted, to the service providing device in accordance with a request for the personal information from the service providing device; and
a step of sending the decryption key to the service providing device in accordance with a request for the decryption key of the message information received from the service providing device, and
a service providing device for providing service to a user through a communication line, comprising:
   a step of sending a request for personal information of the user to a personal information managing device for managing personal information of the user;
   a step of acquiring from the personal information managing device, irreversible message information, which is generated by the personal information managing device, and includes the personal information encrypted;
   a step of sending a request for a decryption key for decrypting the encrypted personal information acquired, to the personal information managing device; and
   a step of acquiring the personal information for checking the user using service by decrypting the message information encrypted, based on the decryption key received from the personal information managing device.

According to an exemplary aspect of the invention, a personal information checking system, comprising:
a personal information managing device for managing personal information; and
a service providing device for providing service to a user through a communication line; wherein
the personal information managing device comprising:
   a unit for registering personal information acquired from a user device of a user using service provided by a service providing device through a communication line;
   a unit for generating irreversible message information containing the personal information registered;
   a unit for encrypting the message information;
   a unit for generating a decryption key for decrypting the message information encrypted;
   a unit for sending the message information encrypted, to the service providing device in accordance with a request for the personal information from the service providing device; and
   a unit for sending the decryption key to the service providing device in accordance with a request for the decryption key of the message information received from the service providing device, wherein
   the service providing device comprising:
      a unit for sending a request for personal information of the user to a personal information managing device for managing personal information of the user;
      a unit for acquiring from the personal information managing device, irreversible message information, which is generated by the personal information managing device, and includes the personal information encrypted;
      a unit for sending a request for a decryption key for decrypting the encrypted personal information acquired, to the personal information managing device; and
      a unit for acquiring the personal information for checking the user using service by decrypting the message information encrypted, based on the decryption key received from the personal information managing device.

According to the present invention, the following effects can be achieved.

A first effect is that a personal information managing device can prevent a service providing device from denying the reception of personal information at a reduced communication load and at a lower cost.

A second effect is that whether or not the personal information managing device has falsified the personal information acquired from a user terminal can be verified by the service providing device at a lower cost.

A third effect is that transmission/reception of the personal information can be simplified when the personal information managing device and the service providing device have already transmitted/received the personal information.

A fourth effect is that the personal information managing device and the service providing device can confirm that the personal information has been transmitted/received without being falsified, and the personal information has been transmitted/received without being repudiated with any timing at a lower cost.

A fifth effect is that a fact that only correct personal information is transmitted/received can be insisted.

A sixth effect is that service using personal information can be provided easily at a lower cost.

### BRIEF DESCRIPTION OF THE DRAWINGS

Fig. 1 is a diagram illustrating the outline of a configuration of a first exemplary embodiment of the present invention;
Fig. 2 is a block diagram illustrating the configuration of the first exemplary embodiment;
Fig. 3 is a diagram illustrating an example of personal information recorded in a personal information storage unit according to the first exemplary embodiment;
Fig. 4 is a diagram illustrating an example of information (table) registered with a decryption key storage unit according to the first exemplary embodiment;
Fig. 5 is a block diagram illustrating an example of a hardware configuration of a personal information managing device and a service providing device according to the first exemplary embodiment;
Fig. 6 is a schematic diagram illustrating the operation of the first exemplary embodiment;
Fig. 7 is a flowchart illustrating the operation of the first exemplary embodiment;
Fig. 8 is a diagram illustrating the outline of a configuration of a second exemplary embodiment of the present invention;
Fig. 9 is a block diagram illustrating the configuration of the second exemplary embodiment;
Fig. 10 is a diagram illustrating an example of a personal information registration certificate, issued by a personal information registration certificate issuing unit, and stored in a personal information registration certificate storage unit according to the second exemplary embodiment;
Fig. 11 is a schematic diagram illustrating the operation related to personal information registration in the operation of the second exemplary embodiment;
Fig. 12 is a flowchart illustrating the operation related to personal information registration in the operation of the second exemplary embodiment;
Fig. 13 is a schematic diagram illustrating the operation related to transmission/reception of personal information in the operation of the second exemplary embodiment;
Fig. 14 is a flowchart illustrating the operation related to transmission/reception of personal information in the operation of the second exemplary embodiment;
Fig. 15 is a block diagram illustrating a configuration of a third exemplary embodiment of the present invention;
Fig. 16 is a schematic diagram illustrating the operation of the third exemplary embodiment;
Fig. 17 is a flowchart illustrating the operation of the third exemplary embodiment;
Fig. 18 is a block diagram illustrating a configuration of a fourth exemplary embodiment of the present invention;
Fig. 19 is a diagram illustrating an example of communication history stored in a communication record storage unit according to the fourth exemplary embodiment;
Fig. 20 is a flowchart illustrating the operation of the personal information managing device in the operation of the fourth exemplary embodiment;
Fig. 21 is a flowchart illustrating the operation of the service providing device in the operation of the fourth exemplary embodiment;
Fig. 22 is a block diagram illustrating a configuration of a fifth exemplary embodiment of the present invention;
Fig. 23 is a diagram illustrating an Example 1 of the present invention;
Fig. 24 is a block diagram illustrating a configuration of the Example 1;
Fig. 25 is a block diagram illustrating a configuration of an Example 2;
Fig. 26 is a block diagram illustrating a configuration of an Example 2;
Fig. 27 is a block diagram illustrating an electronic document delivery system, which prevents falsification and repudiation of information described in Patent Document 1; and
Fig. 28 is a diagram illustrating a situation in which personal information is transmitted/received that the present invention supposes.

### EXEMPLARY EMBODIMENT

### (FIRST EXEMPLARY EMBODIMENT)

Next, a first exemplary embodiment of the present invention will be described in detail with reference to the drawings.

### (STRUCTURE OF THE FIRST EXEMPLARY EMBODIMENT)

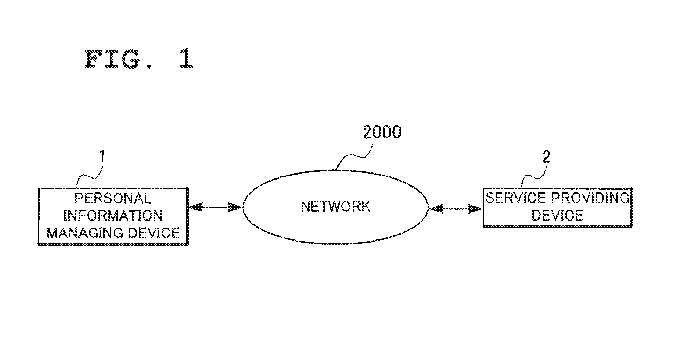

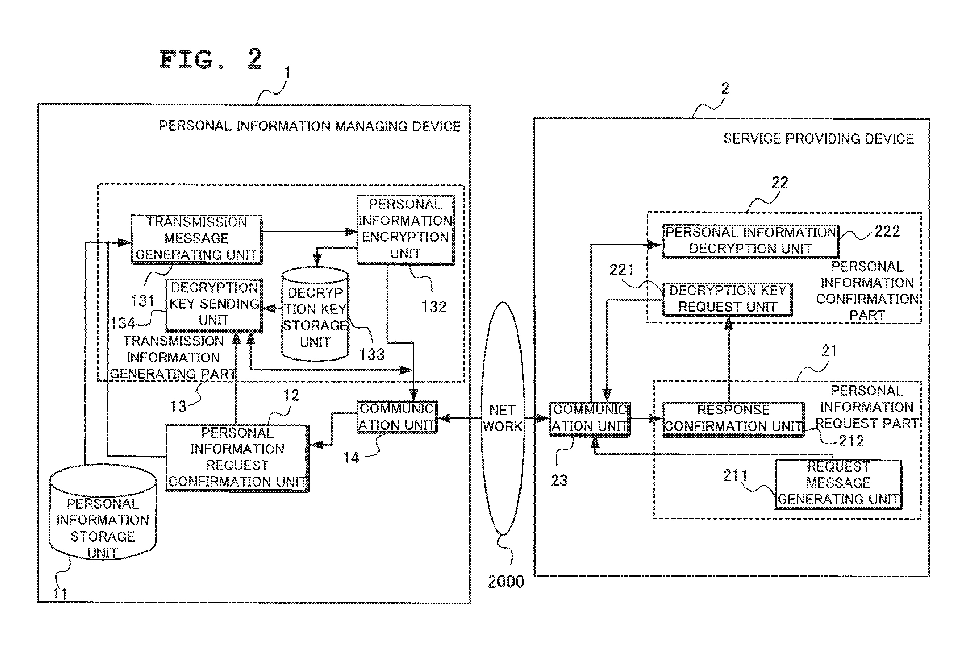

Fig. 1 is a diagram illustrating the outline of a configuration of the present exemplary embodiment, and Fig. 2 is a block diagram illustrating the configuration of the present exemplary embodiment. Referring to Fig. 1, in the present exemplary embodiment, a personal information managing device 1 and a service providing device 2 are connected through a network 2000.

Referring to Fig. 2, the present exemplary embodiment comprises the personal information managing device 1, the service providing device 2 and the network 2000.

The personal information managing device 1 includes a personal information storage unit 11, a personal information request confirmation unit 12, a transmission information generating part 13 and a communication unit 14. Further, the transmission information generating part 13 includes a transmission message generating unit 131, a personal information encryption unit 132, a decryption key storage unit 133 and a decryption key sending unit 134.

On the other hand, the service providing device 2 includes a personal information request part 21, a personal information confirmation part 22 and a communication unit 23. Further, the personal information request part 21 includes a request message generating unit 211 and a response confirmation unit 212, and the personal information confirmation part 22 includes a decryption key request unit 221 and a personal information decryption unit 222.

Each of the unit generally operates as follows.

The personal information storage unit 11 records personal information held by the personal information managing device 1.

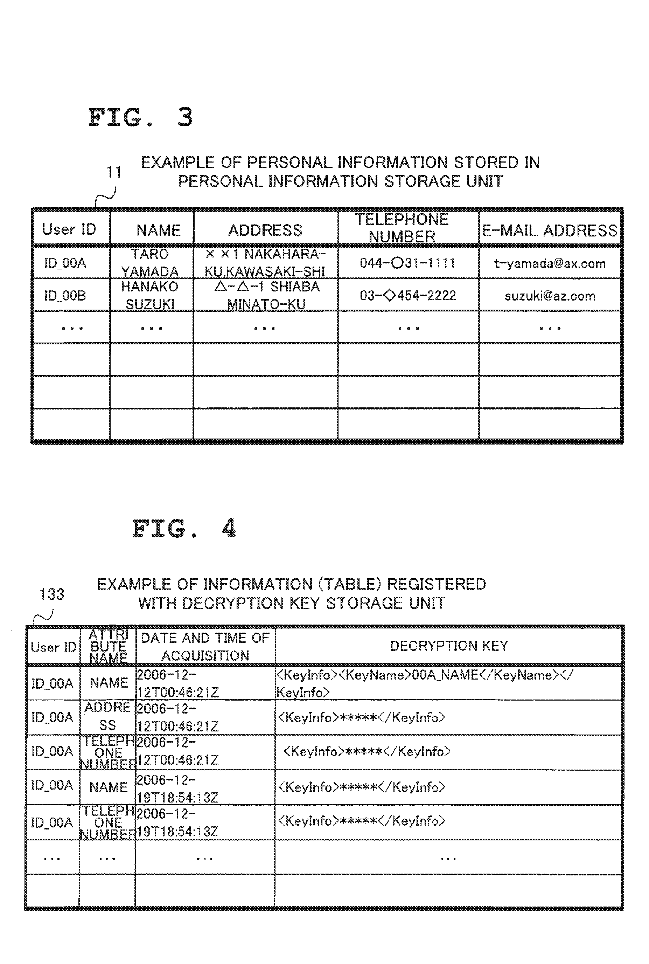

Here, an example of personal information recorded in the personal information storage unit 11 is shown in Fig. 3.

Referring to Fig. 3, for each user ID identifying each personal information to be recorded, the personal information is recorded, associating the name, address, telephone number and e-mail address of the user. The personal information may include marketing information and the like, such as purchase history of the user.

The personal information request confirmation unit 12 analyzes a request message sent to the personal information managing device 1 by another device. In other words, the personal information request confirmation unit 12 analyzes whether the sent request is a request for personal information, or a request for a decryption key for decrypting encrypted personal information.

The transmission message generating unit 131 acquires personal information from the personal information storage unit 11, and, based on the acquired personal information, generates a response message (personal information response message) to be sent to the other device.

The personal information encryption unit 132 generates an encryption key and a decryption key of the personal information to be sent, and encrypts the personal information. Here, personal information is always encrypted whether or not the communication unit 14 has encrypted a communication path (e.g., encryption using SSL). The generated key is stored in the decryption key storage unit 133. Further, the signature of the personal information managing device 1 itself is attached to the encrypted information. With this processing, if the service providing device 2 has falsified the personal information, the personal information managing device 1 can prove that the personal information managing device 1 has not been involved in the falsification. This is because, if the personal information managing device 1 has falsified the information, verification of the signature attached by the personal information managing device 1 fails, which can prove that another device except the personal information managing device 1 has falsified it.

The decryption key storage unit 133 registers the decryption key and information related to the key. The related information includes an encryption key, a user name related to the encrypted personal information, and the name of a receiving device, which is a destination to which the personal information is transmitted. In other words, the decryption key storage unit 133 manages decryption keys for each user, which is a main body of the personal information.

Here, an example of information (table) registered with the decryption key storage unit 133 is shown in Fig. 4.

Referring to Fig. 4, for each attribute (e.g., name, address, telephone number and e-mail address) of the acquired user personal information, the information (table) is registered, associating a user ID identifying each attribute of the acquired personal information, date and time of acquisition and a decryption key decrypting the encrypted information. Although in the example of the information (table), as the format of a decryption key, formats defined in the XML encryption (W3C Recommendation, "XML Encryption Syntax and Processing", 10 December 2002, http://www.w3.org/TR/xmlenc-core/, Non-Patent Document 3) and the XML signature (W3C Recommendation, "XML-Signature Syntax and Processing", 12 February 2002, http://www.w3.org/TR/xmldsig-core/, Non-Patent Document 4) are used, other formats may be used of course, and there is no particular limit on the format to be used.

When the device to which the personal information managing device 1 encrypted and transmitted the personal information requests the decryption key, the decryption key sending unit 134 transmits the decryption key, which has been stored in the decryption key storage unit 133. In other words, the decryption key sending unit 134 compares message IDs and the like to examine a correspondence between the decryption key request message and the personal information response message.

The communication unit 14 transmits information generated by the personal information encryption unit 132, and information by the decryption key sending unit 134 to the other device, and receives a message the other device sent to the personal information managing device 1.

The request message generating unit 211 generates a request message (personal information request message) to request required personal information from the other device.

The response confirmation unit 212 confirms the response message. What is to be confirmed is whether or not the signature of the personal information managing device 1 is attached to the response message (personal information response message) to the personal information request received by the communication unit 23, and whether or not the signature is correct, for example. By confirming that the signature of the personal information managing device 1 is correctly attached, the service providing device 2 can prevent the personal information managing device 1 from denying the transmission of the personal information.

The decryption key request unit 221 generates a message (decryption key request message) to request the decryption key for breaking the code when receiving the encrypted personal information. In other words, the decryption key request unit 221 requests a specific decryption key corresponding to the encrypted specific personal information in order to decrypt the encrypted specific personal information.

The personal information decryption unit 222 uses the decryption key to decrypt the encrypted personal information received by the communication unit 23, and acquires the personal information.

The communication unit 23 transmits the personal information request message, the decryption key request message and the like. The communication unit 23 also receives the encrypted personal information and the decryption key.

An example of the hardware configuration of the personal information managing device 1 and the service providing device 2 will now be described.

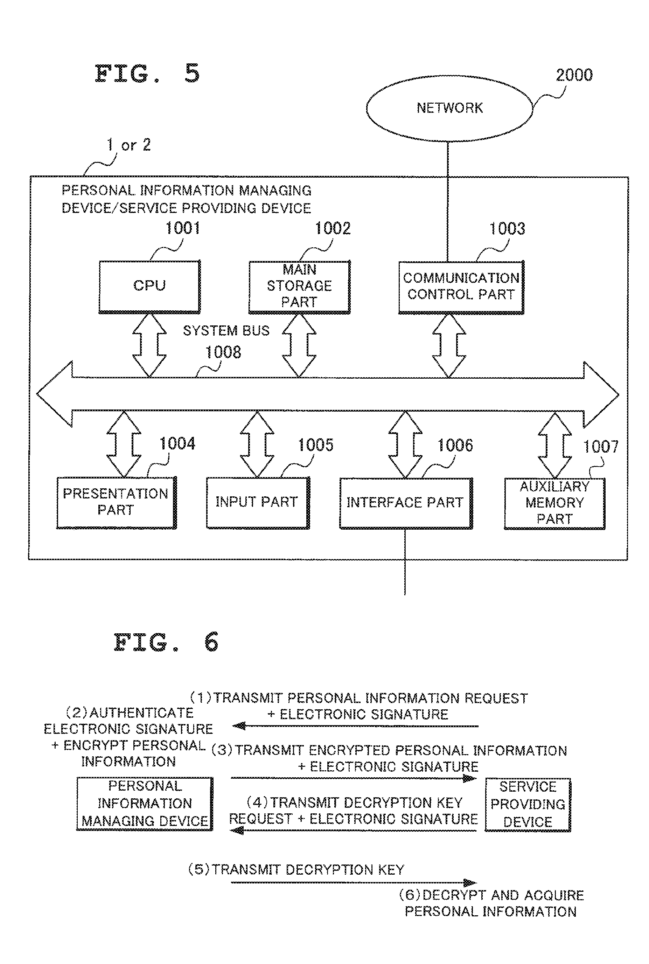

Fig. 5 is a block diagram illustrating an example of the hardware configuration of the personal information managing device 1 and the service providing device 2 according to the present exemplary embodiment.

Referring to Fig. 5, the personal information managing device 1 and the service providing device 2 according to the present invention may be achieved with the similar hardware configuration to that of a general computer device, and comprise a CPU (Central Processing Unit) 1001, a main storage part 1002, which is a main memory such as a RAM (Random Access Memory), and is used for as a work area for data and a temporary save area for data, a communication control part 1003 for transmitting/receiving data through the network 2000, a presentation part 1004 such as a liquid crystal display, a printer and a speaker, an input part 1005 such as a keyboard and a mouse, an interface part 1006, which is connected to peripheral equipment to transmit/receive data, an auxiliary memory part 1007, which is a hard disk device formed of a nonvolatile memory such as a ROM (Read Only Memory), a magnetic disk and a semiconductor memory, and a system bus 1008 for interconnecting each components described above of the information processing unit.

The personal information managing device 1 and the service providing device 2 according to the present invention can achieve their operations obviously in hardware by implementing in the personal information managing device 1 and the service providing device 2 a circuit component comprising a hardware component such as an LSI (Large Scale Integration (LSI)) in which a program for achieving such a function is incorporated, as well as in software by executing a program for providing each function of each component described above with the CPU 1001 on the computer processing device.

In other words, the CPU 1001 loads into the main storage part 1002 and executes the program stored in the auxiliary memory part 1007, and controls the operation of the personal information managing device 1 or service providing device 2 to achieve each function described above in software manner.

Personal information managing devices 4, 6 and 8 and service providing devices 5, 7 and 9 described later may have a configuration as described above to achieve each function described above in hardware or in software.

### (OPERATION OF THE FIRST EXEMPLARY EMBODIMENT)

Next, the entire operation of the present exemplary embodiment will be described in detail with reference to Figs. 2 to 7.

It is assumed that the user has registered the personal information with the personal information storage unit 11. In this situation, the service providing device 2 requests the personal information from the personal information managing device 1 to acquire the personal information.

First, the outline of the operation in which the service providing device 2 requests the personal information from the personal information managing device 1 to acquire the personal information will be described with reference to Fig. 6.
(1) The service providing device 2 transmits to the personal information managing device 1 a personal information request message to which the electronic signature of the service providing device 2 is attached.
(2) Upon authenticating the electronic signature, the personal information managing device 1 encrypts the requested personal information.
(3) The personal information managing device 1 attaches its electronic signature to the encrypted personal information, and transmits it to the service providing device 2.
(4) Upon receiving the encrypted personal information, and authenticating the electronic signature, the service providing device 2 transmits to the personal information managing device 1 the decryption key request message to which the electronic signature of the service providing device 2 is attached.
(5) Upon authenticating the electronic signature, the personal information managing device 1 transmits the decryption key to the service providing device 2.
(6) The service providing device 2 decrypts the encrypted personal information to acquire the personal information.

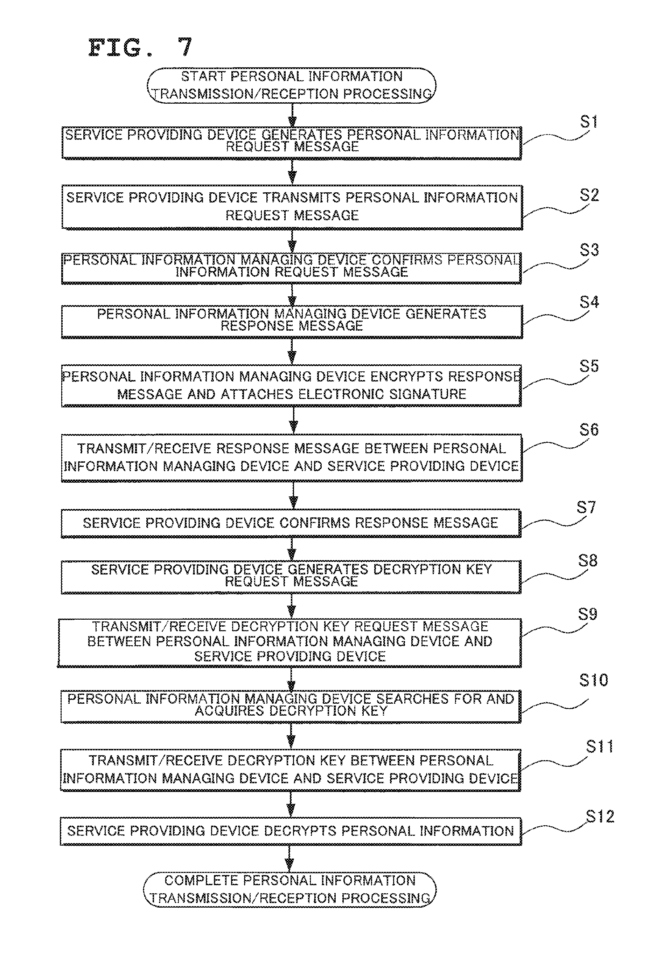

Next, the operation in which the service providing device 2 requests the personal information from the personal information managing device 1 to acquire the personal information will be described in detail with reference to Fig. 2 and a flowchart in Fig. 7.

First, the request message generating unit 211 generates a personal information request message (step S1). This processing starts for instance by the transmission of a personal information request to the request message generating unit 211 when a device, for example, which uses personal information, acquires personal information.

The electronic signature of the service providing device 2 is attached to the personal information request message generated with this processing. Through this electronic signature, the service providing device 2 cannot deny that it has requested personal information.

Next, the communication unit 23 of the service providing device 2 sends the personal information request message to the communication unit 14 of the personal information managing device 1 (step S2).

When the personal information managing device 1 receives the personal information request message, the personal information request confirmation unit 12 confirms the request message (step S3). At that time, the confirmation processing includes processing such as confirmation as to whether or not the personal information is managed by the personal information managing device 1, and verification of the electronic signature attached to the message.

When the confirmation processing is completed, the transmission message generating unit 131 acquires the personal information from the personal information storage unit 11, and, based on the acquired personal information, generates a response message (step S4).

Next, the personal information encryption unit 132 encrypts the response message and attaches the electronic signature thereto (step S5). At that time, an encryption key and a decryption key are generated, and the decryption key is registered with the decryption key storage unit 133. Attaching the electronic signature prevents the personal information from being falsified at the service providing device 2, and prevents the personal information managing device 1 from denying that it has sent the personal information.

Next, the communication unit 14 of the personal information managing device 1 sends the response message to the communication unit 23 of the service providing device 2 (step S6).

When the service providing device 2 receives the response message, the response confirmation unit 212 confirms the response message (step S7). This confirmation operation is verification of the electronic signature of the response message, for example.

Next, the decryption key request unit 221 generates a message to request the decryption key for decrypting the information acquired in step S6 (step S8).

Next, the communication device 23 of the service providing device 2 sends the decryption key request message to the communication unit 14 of the personal information managing device 1 (step S9). To this message, the electronic signature of the service providing device 2 is attached. Through the transmission/reception of the decryption key request message between the personal information managing device 1 and service providing device 2, processing corresponding to ack is performed, producing the same effect as ack, and rendering ack unnecessary (since the request for the decryption key can be regarded as a confirmation message of the acquisition of personal information), thus, the personal information managing device 1, which received the decryption key request message bearing the electronic signature, can prevent the service providing device 2 from denying that it has already acquired the encrypted personal information.

When the personal information managing device 1 receives the decryption key request message, the decryption key sending unit 134 searches in the decryption key storage unit 133 to acquire the decryption key (step S10).

Next, the communication unit 14 of the personal information managing device 1 sends the decryption key to the communication unit 23 of the service providing device 2 (step S11).

When the service providing device 2 acquires the decryption key, the personal information decryption unit 222 decrypts the encrypted personal information, which has already been acquired (step S12).

The above operation allows the personal information managing device 1 to acquire the reception confirmation message of the personal information from the service providing device 2, therefore, the repudiation of transmission/reception of the personal information can be prevented.

### (EFFECTS OF THE FIRST EXEMPLARY EMBODIMENT)

Next, the effects of the present exemplary embodiment will be described. According to the exemplary embodiment, the following effects can be achieved.

First, instead of managing personal information by oneself, the service providing device 2 is configured to acquire personal information from the personal information managing device 1 as necessary, therefore, the service providing device does not have to manage personal information, allowing the costs for managing personal information to be reduced.

Second, since the service providing device 2 transmits to the personal information managing device 1 the personal information request message to which the electronic signature of the service providing device 2 has been attached, through this electronic signature, the personal information managing device 1 can prevent the service providing device 2 from denying that it has requested the personal information.

Third, since the personal information managing device 1 attaches its electronic signature to the encrypted personal information before transmitting it to the service providing device 2, through this electronic signature, altering personal information at the service providing device 2 can be prevented, and the personal information managing device 1 cannot deny that it has sent personal information.

Fourth, since through the transmission/reception of the decryption key request message to the encrypted response message, processing corresponding to ack is performed, producing the same effect as ack, the personal information managing device 1, which received the decryption key request message bearing the electronic signature, can prevent the service providing device 2 from denying that it has already acquired the encrypted personal information, without performing processing by ack, and without requiring a third party for monitoring the circulation of personal information. In other words, since the service providing device 2, which received the encrypted response message, always sends the reception confirmation message (decryption key request message) of the personal information to the personal information managing device 1, the personal information managing device 1 can prevent the service providing device 2 from denying the reception of the personal information, without requiring a third party for monitoring the circulation of personal information, at a reduced communication load and at a lower cost.

### (SECOND EXEMPLARY EMBODIMENT)

Next, a second exemplary embodiment of the present invention will be described in detail with reference to the drawings.

### (STRUCTURE OF THE SECOND EXEMPLARY EMBODIMENT)

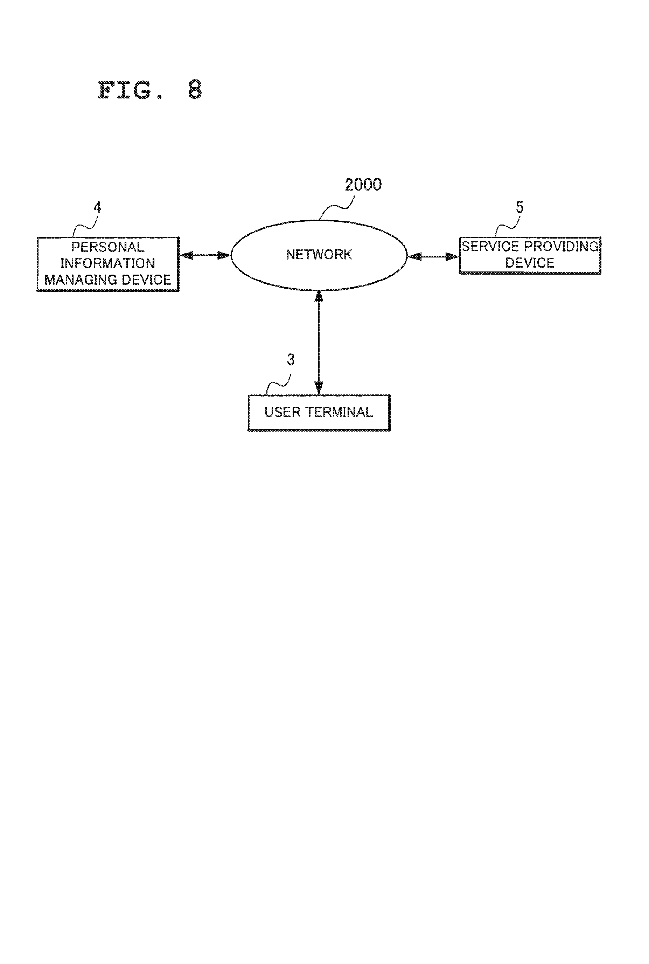

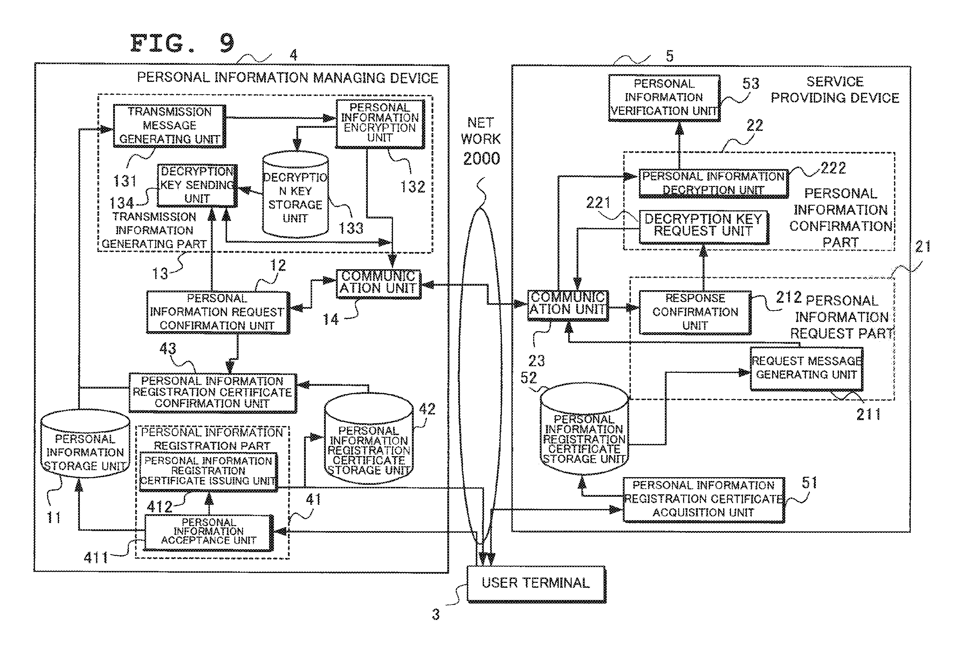

Fig. 8 is a diagram illustrating the outline of a configuration of the present exemplary embodiment, and Fig. 9 is a block diagram illustrating the configuration of the present exemplary embodiment. Referring to Fig. 8, in the present exemplary embodiment, a user terminal 3, a personal information managing device 4 and a service providing device 5 are connected through a network 2000.

Referring to Fig. 9, the second exemplary embodiment of the present invention comprises the user terminal 3, the personal information managing device 4, the service providing device 5 and the network 2000.

The personal information managing device 4 has a personal information registration part 41, a personal information registration certificate storage unit 42 and a personal information registration certificate confirmation unit 43, in addition to the components in the personal information managing device 1 according to the first exemplary embodiment shown in Fig. 2.

Further, the service providing device 5 has a personal information registration certificate acquisition unit 51, a personal information registration certificate storage unit 52 and a personal information verification unit 53, in addition to the configuration of the service providing device 2 according to the first exemplary embodiment shown in Fig. 2. The personal information registration part 41 includes a personal information acceptance unit 411 and a personal information registration certificate issuing unit 412.

Each of the unit operates as follows.

The personal information acceptance unit 411 stores personal information, which the user terminal 3 requested to register, in the personal information storage unit 11.

The personal information registration certificate issuing unit 412 issues a personal information registration certificate corresponding to the personal information. The personal information registration certificate is information required for the other device to request the personal information from the personal information managing device 4. If the other device does not present the personal information registration certificate, the personal information managing device 4 does not transmit the personal information. The personal information registration certificate includes information related to the personal information, and information associating personal information with a personal information registration certificate one to one. For example, the personal information registration certificate includes the type of personal information, a user registering the personal information, date and time of registration, a one-way hash value generated from the personal information and the like, and the electronic signature of the personal information managing device 4.

The personal information registration certificate is data to insist to the other device that the personal information registered by the user is being managed by the personal information managing device 4 without altering. This certificate includes not only a user name, time of registration and a registered personal information name, but also information uniquely determined from the registered personal information such as the one-way hash value generated from the personal information.

By using the information, the user terminal 3, its user, and the service providing device 5 can confirm that the personal information of the user has not been falsified. For example, by comparing the hash value generated from the registered personal information with a hash value contained in the personal information registration certificate, the user terminal 3 can confirm whether or not the personal information managing device 4 has registered correct information. Further, by comparing the hash value generated based on the personal information acquired from the personal information managing device 4 with the hash value contained in the certificate acquired from the user terminal 3, the service providing device 5 can confirm whether or not the personal information managing device 4 is managing the personal information acquired from the user terminal 3 without altering.

The personal information registration certificate storage unit 42 stores the personal information registration certificate issued by the personal information registration certificate issuing unit 412.

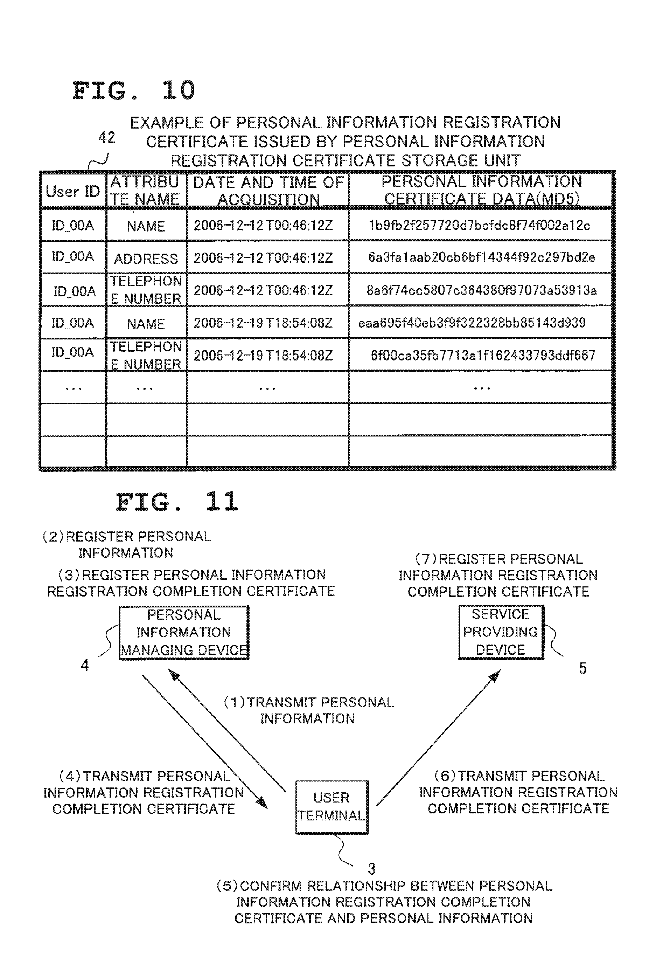

Fig. 10 is a diagram illustrating an example of the personal information registration certificate issued by the personal information registration certificate issuing unit 412 and stored in the personal information registration certificate storage unit 42.

Referring to Fig. 10, for each attribute (e.g., name, address, telephone number and e-mail address) of the personal information of the user stored in the personal information acceptance unit 411, the personal information registration certificate is issued, associating a user ID identifying each attribute of the acquired personal information, date and time of acquisition and personal information certificate data. The personal information certificate data is a hash value generated based on each attribute of the personal information; for example "1b9fb2f257720d7bcfdc8f74f002a12c" is the value generated based on "Taro YAMADA".

The personal information registration certificate confirmation unit 43 confirms the personal information registration certificate sent by the other device to the personal information managing device 4. This confirmation is the processing of verifying the signature on the personal information registration certificate to confirm that the personal information registration certificate has not been falsified, and confirm that the personal information has been stored in the personal information storage unit 11.

The personal information registration certificate acquisition unit 51 acquires from the user terminal 3 the personal information registration certificate, which is required when the personal information is acquired.

The personal information registration certificate storage unit 52 stores the personal information registration certificate acquired by the personal information registration certificate acquisition unit 51.

The personal information verification unit 53 compares information contained in the personal information registration certificate acquired from the user terminal 3 with the personal information acquired from the personal information managing device 4. What is to be compared at that time is comparison between the hash value generated from the personal information acquired from the personal information managing device and the hash value contained in the personal information registration certificate, for example; if they are identical, it is determined that the personal information has not been falsified.

### (OPERATION OF THE SECOND EXEMPLARY EMBODIMENT)

Next, the operation of the present exemplary embodiment will be described in detail with reference to Figs. 9 to 14. This operation is divided into the operation in which the user terminal 3 registers the personal information with the personal information managing device 4 and the operation in which the service providing device 5 acquires the personal information from the personal information managing device 4.

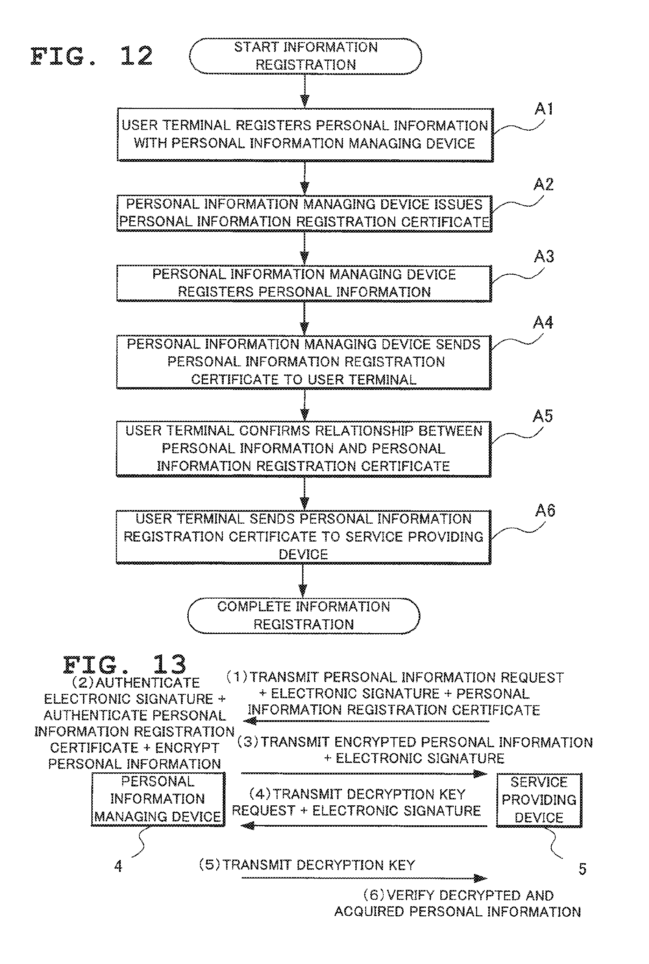

First, the operation in which the user terminal 3 registers the personal information will be described with reference to schematic diagrams in Figs. 9 and 11, and a flowchart in Fig. 12.

For example, upon notification of a personal information registration request by the service 5, which requested to provide service, the user terminal 3 transmits the personal information to the personal information managing device 4 (Fig. 11 (1)), and registers the personal information with the personal information storage unit 11 of the personal information managing device 4 through the personal information acceptance unit 411 (step A1 in Fig. 12, and Fig. 11 (2)).

Next, the personal information registration certificate issuing unit 412 issues a personal information registration certificate corresponding to the personal information acquired in step A1 (step A2).

Further, in the personal information registration certificate storage unit 42, the personal information acquired in step A1 and the personal information registration certificate issued in step A2 are associated and registered (step A3, Fig. 11 (3)).

Next, the personal information registration certificate issuing unit 412 sends the personal information registration certificate to the user terminal 3 (step A4, Fig. 11 (4)).

Upon acquiring the personal information registration certificate, the user terminal 3 confirms whether or not the relationship between the personal information registration certificate and the personal information is correct (step A5, Fig. 11 (5)). This processing compares the hash value for the personal information transmitted from the user terminal 3 to the personal information managing device 4 in step A1 with the hash value written in the personal information registration certificate issued by the personal information managing device 4 to confirm whether or not the registered personal information is correct. Confirmation as to whether or not the relationship between the acquired personal information registration certificate and the personal information is correct may be entered by the user of the user terminal 3. If the hash values are different from each other, the personal information managing device 4 would have registered information different from the personal information that the user terminal 3 requested to register, therefore, the personal information registration processing is aborted. On the other hand, if the hash values are identical, the personal information managing device 4 would have registered the information as-is that the user terminal 3 requested to register.

If the hash values are identical, the user terminal 3 then transmits the personal information registration certificate to the personal information registration certificate storage unit 52 (Fig. 11 (6)), and registers the personal information registration certificate with the personal information registration certificate storage unit 52 through the personal information registration certificate acquisition unit 51 of the service providing device 5 (step A6, Fig. 11 (7)). When the user terminal 3 registered the personal information, the personal information registration certificate acquired from the personal information managing device 4 is registered with the service providing device 5 in advance, thus the service providing device 5 can acquire the personal information from the personal information managing device 4 with any timing.

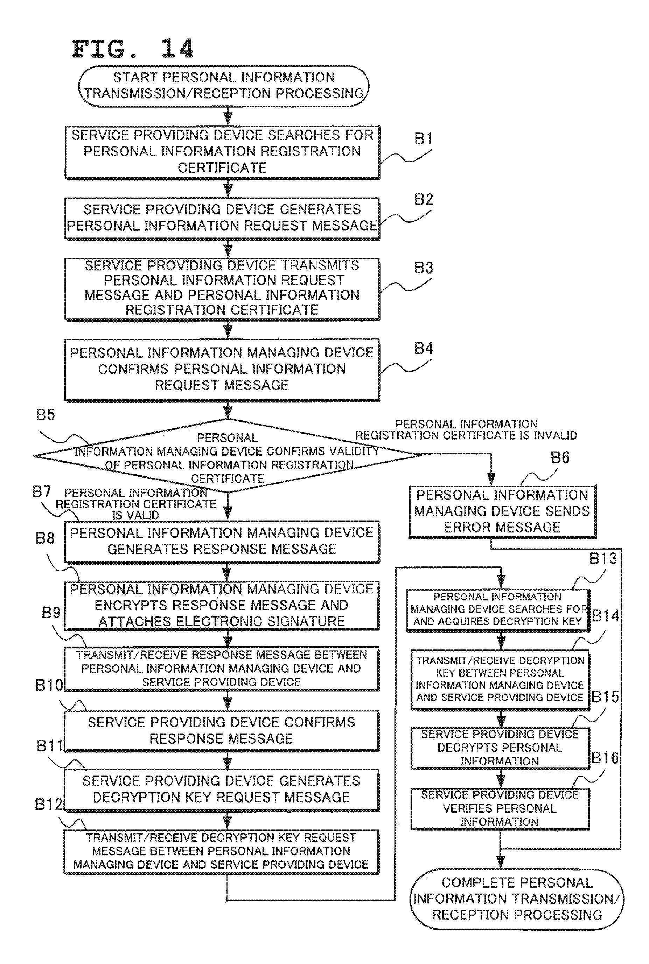

Next, the operation in which the service providing device 5 requests the personal information from the personal information managing device 4 to acquire the personal information will be described with reference to schematic diagrams in Figs. 9 and 13, and a flowchart in Fig. 14.

First, the outline of the operation in which the service providing device 5 requests the personal information from the personal information managing device 4 to acquire the personal information will be described with reference to Fig. 13.
(1) The service providing device 5 transmits to the personal information managing device 4 a personal information request message and a personal information registration certificate to which the electronic signature of the service providing device 5 is attached.
(2) Upon authenticating the electronic signature and the personal information registration certificate, the personal information managing device 4 encrypts the requested personal information.
(3) The personal information managing device 4 attaches its electronic signature to the encrypted personal information, and transmits it to the service providing device 5.
(4) Upon receiving the encrypted personal information, and authenticating the electronic signature, the service providing device 5 transmits to the personal information managing device 4 the decryption key request message to which the electronic signature of the service providing device 5 is attached.
(5) Upon authenticating the electronic signature, the personal information managing device 4 transmits the decryption key to the service providing device 5.
(6) The service providing device 5 decrypts the encrypted personal information to verify the acquired personal information.

Next, the operation in which the service providing device 5 requests the personal information from the personal information managing device 4 to acquire the personal information will be described in detail with reference to Figs. 9 and 14.

A situation for the service providing device 5 to start acquisition from the other device in order to use personal information is when the request message generating unit 211 receives a demand regarding a request for the personal information. At that time, the request message generating unit 211 searches in the personal information registration certificate storage unit 52 in order to confirm whether or not there is a personal information registration certificate related to the personal information to be requested (step B1 in Fig. 14). If there is no personal information registration certificate, no personal information is transmitted/received between the personal information managing device 4 and the service providing device 5.

If there is a personal information registration certificate, the request message generating unit 211 acquires the personal information registration certificate and generates a personal information request message (step B2). To the personal information request message, the electronic signature of the service providing device 5 is attached. The electronic signature prevents the service providing device 5 from denying that it requests the personal information.

Next, the communication unit 23 of the service providing device 5 collectively sends the personal information request message and the personal information registration certificate to the communication unit 14 of the personal information managing device 4 (step B3).

When the personal information managing device 4 receives the personal information request message, the personal information request confirmation unit 12 confirms the request message (step B4). The confirmation processing at that time is, for example, the processing of confirming whether or not personal information is being managed, or of verifying the electronic signature on the message.

When the confirmation processing is completed, the personal information registration certificate confirmation unit 43 then confirms the personal information registration certificate acquired from the service providing device 5 (step B5). This confirmation processing is to confirm the electronic signature on the personal information registration certificate, or confirm whether or not the personal information corresponding to the personal information registration certificate has been registered with the personal information storage unit 11, for example. When the confirmation processing fails, the personal information managing device 4 generates an error message at the personal information request confirmation unit 12, and sends the error message to the service providing device 5 through the communication unit 14, thereby aborting the transmission/reception of the personal information (step B6).

When the confirmation processing is successfully completed, the transmission message generating unit 131 sends the personal information from the personal information storage unit 11, and generates a response message (step B7).

Next, the personal information encryption unit 132 encrypts the response message and attaches the electronic signature thereto (step B8). At that time, an encryption key and a decryption key are generated, and the decryption key is registered with the decryption key storage unit 133. Attaching the electronic signature prevents the personal information from being falsified at the service providing device 5, and prevents the personal information managing device 4 from denying that it sent the personal information.

Next, the communication unit 14 of the personal information managing device 4 sends the response message to the communication unit 23 of the service providing device 5 (step B9).

When the service providing device 5 receives the response message, the response confirmation unit 212 confirms the response message (step B10). This confirmation operation is verification of the electronic signature of the response message, for example.

Next, the decryption key request unit 221 generates a message to request the decryption key corresponding to the information acquired in step B9 (step B11).

Next, the communication device 23 of the service providing device 5 sends the decryption key request message to the communication unit 14 of the personal information managing device 4 (step B12). To this message, the electronic signature of the service providing device 5 is attached. Thus, the personal information managing device 4, which received the decryption key request message bearing the electronic signature, can prevent the service providing device 5 from denying that it has already acquired the encrypted personal information.

When the personal information managing device 4 receives the decryption key request message, the decryption key sending unit 134 searches in the decryption key storage unit 133 to acquire the decryption key (step B13).

Next, the communication unit 14 of the personal information managing device 4 sends the decryption key to the communication unit 23 of the service providing device 5 (step B14).

When the service providing device 5 acquires the decryption key, the personal information decryption unit 222 decrypts the encrypted personal information, which has already been acquired (step B15).

Next, the personal information verification unit 53 verifies the decrypted personal information (step B16). The verification processing at that time is to compare the hash value generated from the personal information with the hash value contained in the personal information registration certificate, for example. If they are identical, the service providing device 5 can confirm that the personal information managing device 4 has not falsified the personal information. If the confirmation of the personal information fails, it is determined that the personal information has been falsified, and the transmission/reception of the personal information is terminated.

### (EFFECTS OF THE SECOND EXEMPLARY EMBODIMENT)

Next, the effects of the present exemplary embodiment will be described.

According to the present exemplary embodiment, the personal information managing device 4 and the service providing device 5 are each constituted to have units for non repudiation, and confirm transmitted/received messages, therefore, the personal information managing device 4 and the service providing device 5 can independently manage the personal information, and prove that only correct personal information is transmitted/received.

### (THIRD EXEMPLARY EMBODIMENT)

Next, a third exemplary embodiment of the present invention will be described in detail with reference to the drawings.

### (STRUCTURE OF THE THIRD EXEMPLARY EMBODIMENT)

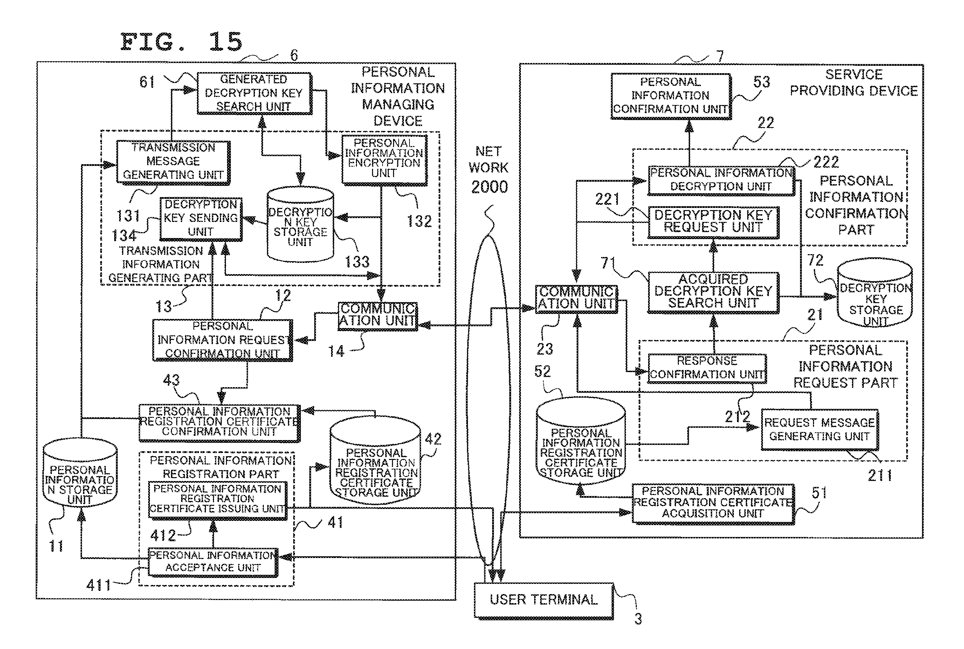

Referring to Fig. 15, the third exemplary embodiment according to the present invention is different from the second exemplary embodiment in that a personal information managing device 6 comprises a generated decryption key search unit 61, in addition to the components in the personal information managing device 4 according to the second exemplary embodiment shown in Fig. 9. Further, the third exemplary embodiment is different from the second exemplary embodiment in that a service providing device 7 comprises an acquired decryption key search unit 71 and a decryption key storage unit 72, in addition to the components in the service providing device 5 according to the second exemplary embodiment shown in Fig. 9.

Each of the unit operates as follows.

The generated decryption key search unit 61 searches in the decryption key storage unit 133 to determine whether or not the personal information managing device 6 has already generated a decryption key.

The acquired decryption key search unit 71 searches in the decryption key storage unit 72 to determine whether or not the service providing device 7 has already acquired the decryption key. If the key has already been acquired, the process goes to processing for decrypting the personal information by using the decryption key, otherwise, the process goes to processing for requesting the decryption key.

The decryption key storage unit 72 stores the decryption key and information related, to the key. The related information includes ID assigned to the personal information managing device, which issued the decryption key, and a user name, for example.

### (OPERATION OF THE THIRD EXEMPLARY EMBODIMENT)

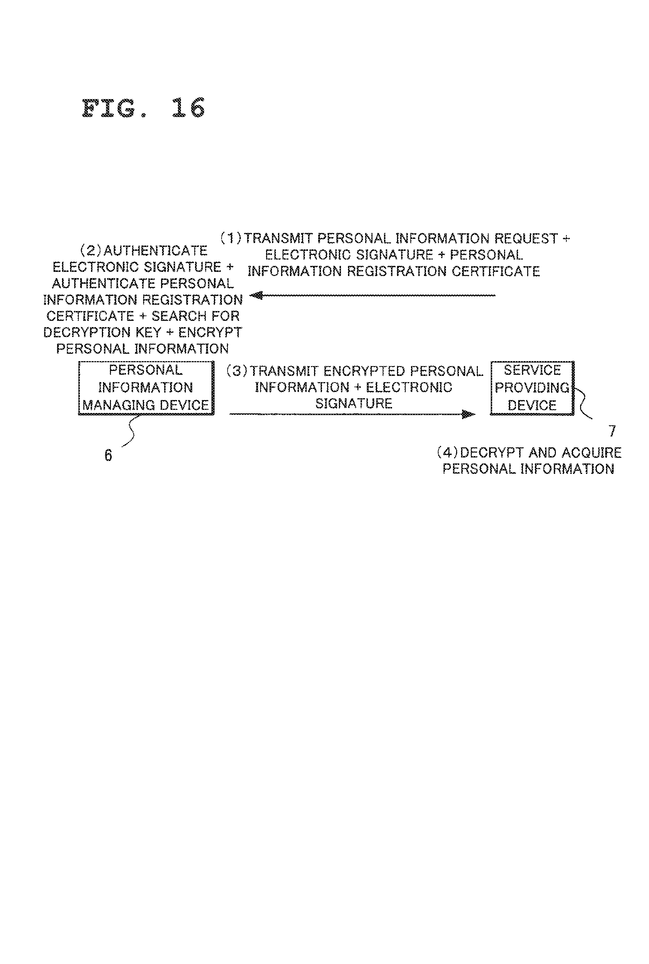

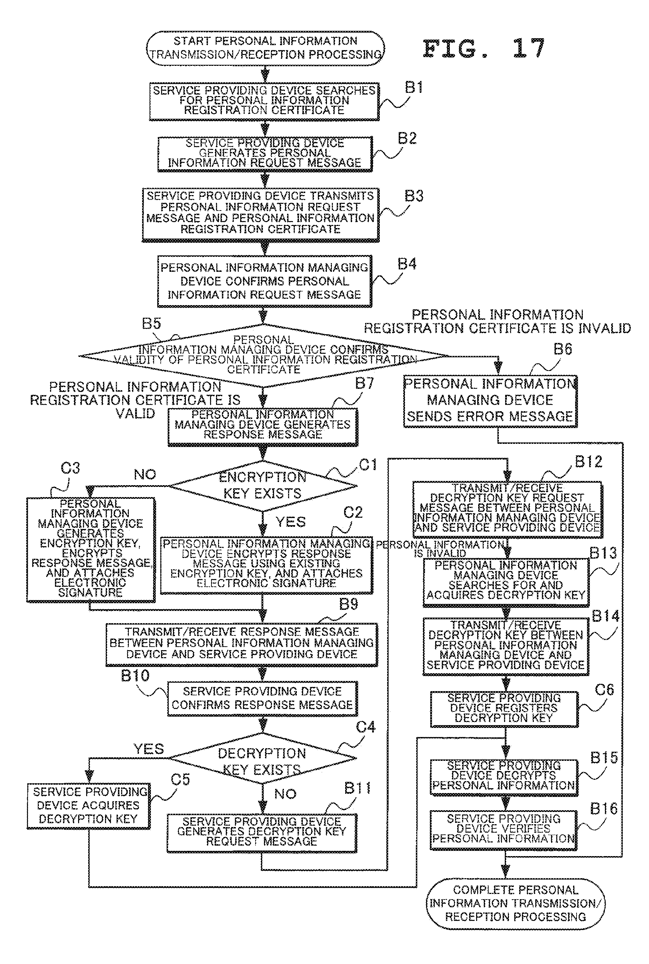

Next, the entire operation of the present exemplary embodiment will be described with reference to schematic diagrams in Figs. 15 and 16, and a flowchart in Fig. 17.

First, the outline of the operation in which the service providing device 7 requests the personal information from the personal information managing device 6 to acquire the personal information will be described with reference to Fig. 16.
(1) The service providing device 7 transmits to the personal information managing device 6 a personal information request message and a personal information registration certificate to which the electronic signature of the service providing device 7 is attached.
(2) The personal information managing device 6 authenticates the electronic signature and the personal information registration certificate, and uses a decryption key, which was acquired by searching in the decryption key storage unit 133, to encrypt the requested personal information.
(3) The personal information managing device 6 attaches its electronic signature to the encrypted, personal information, and transmits it to the service providing device 7.
(4) Upon receiving the encrypted personal information, and authenticating the electronic signature, the service providing device 7 uses the acquired decryption key to decrypt the encrypted personal information to acquire the personal information.

Next, the operation in which the service providing device 7 requests the personal information from the personal information managing device 6 to acquire the personal information will be described in detail with reference to Figs. 15 and 17.

The operation in which the service providing device 7 requests the personal information from the personal information managing device 6, and sends the personal information registration certificate is same as the operation (step B1 to step B7 in Fig. 17) from step B1 to step B7 in the second exemplary embodiment of the present invention.

When the generation of the response message sent by the personal information managing device 6 is completed, the generated decryption key search unit 61 searches in the decryption key storage unit 133 to confirm whether or not the personal information managing device 6 has already generated the decryption key (step C1).

If the key has already been generated, the personal information encryption unit 132 acquires the decryption key from the decryption key storage unit 133, and encrypts the response message (step C2).

However, if there is no decryption key in step C1, the personal information encryption unit 132 generates encryption and decryption keys, which are registered with the decryption key storage unit 133, and encrypts the response message (step C3). The personal information encryption unit 132 attaches the signature of the personal information managing device 6 to the response message when it encrypts the response message.

Next, the communication unit 14 sends the response message to the communication unit 23 (Step B9).

When the service providing device 7 receives the response message, the response confirmation unit 212 confirms the response message (step B10).

Next, the acquired decryption key search unit 71 searches in the decryption key storage unit 72 to determine whether or not the decryption key has been already acquired (step C4).

If there is the decryption key in the decryption key storage unit 72, the acquired decryption key search unit 71 acquires the decryption key (step C5).

Next, the same operation as the processes from step B15 onward in the second exemplary embodiment of the present invention is performed.

On the other hand, if there is no decryption key in step C4, the same processes as those from steps B11 to B14 in the second exemplary embodiment of the present invention are performed.

When service providing device 7 acquires the decryption key, the decryption key is registered with the decryption key storage unit 72 (step C6).

Next, the personal information is decrypted using the acquired decryption key (step B15).

The decrypted personal information is verified by the personal information verification unit 53 as in step B16 in the second exemplary embodiment of the present invention (step B16).

### (EFFECTS OF THE THIRD EXEMPLARY EMBODIMENT)

Next, the effects of the exemplary embodiment of the present invention will be described.

In the exemplary embodiment of the present invention, if the service providing device 7 repeatedly requests the same information, communication can be simplified.

The reason is that the present exemplary embodiment is configured to reuse a decryption key if the decryption key has been already acquired. A case in which the service providing device 7 repeatedly requests the same information many times is a case in which the service providing device 7 itself does not manage the personal information. The service providing device 7 does not manage the personal information, thus the cost for privacy management can be reduced. Even if the service providing device 7 itself does not manage the personal information, the service providing device 7 manages the decryption key, thus allowing exchange of request/response message of the decryption key to be eliminated, thus simplifying the communication of the exchange of the personal information.

### (FOURTH EXEMPLARY EMBODIMENT)

Next, a fourth exemplary embodiment of the present invention will be described in detail with reference to the drawings.

### (STRUCTTJRE OF THE FOURTH EXEMPLARY EMBODIMENT)

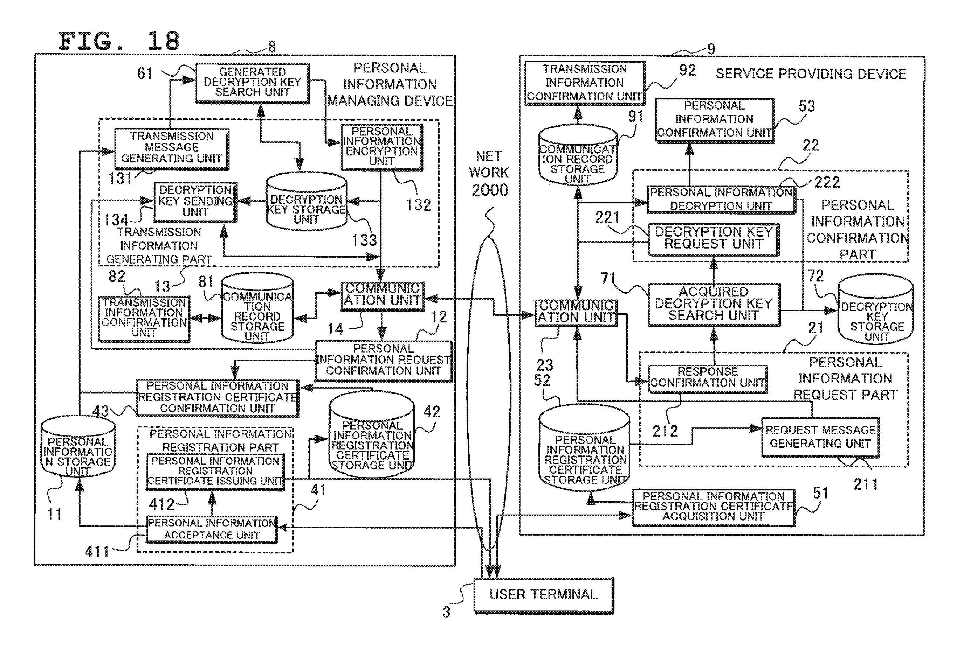

Referring to Fig. 18, the fourth exemplary embodiment according to the present invention is different from the third exemplary embodiment in that a personal information managing device 8 has a communication record storage unit 81 and a transmission information confirmation unit 82, in addition to the components in the personal information managing device 6 according to the third exemplary embodiment shown in Fig. 15. Further, the fourth exemplary embodiment is different from the third exemplary embodiment in that a service providing device 9 has a communication record storage unit 91 and a transmission information confirmation unit 92, in addition to the components in the service providing device 7 according to the third exemplary embodiment shown in Fig. 15.

The communication record storage unit 81 is unit for storing communication history (communication record), and stores messages transmitted or received by the personal information managing device 8.

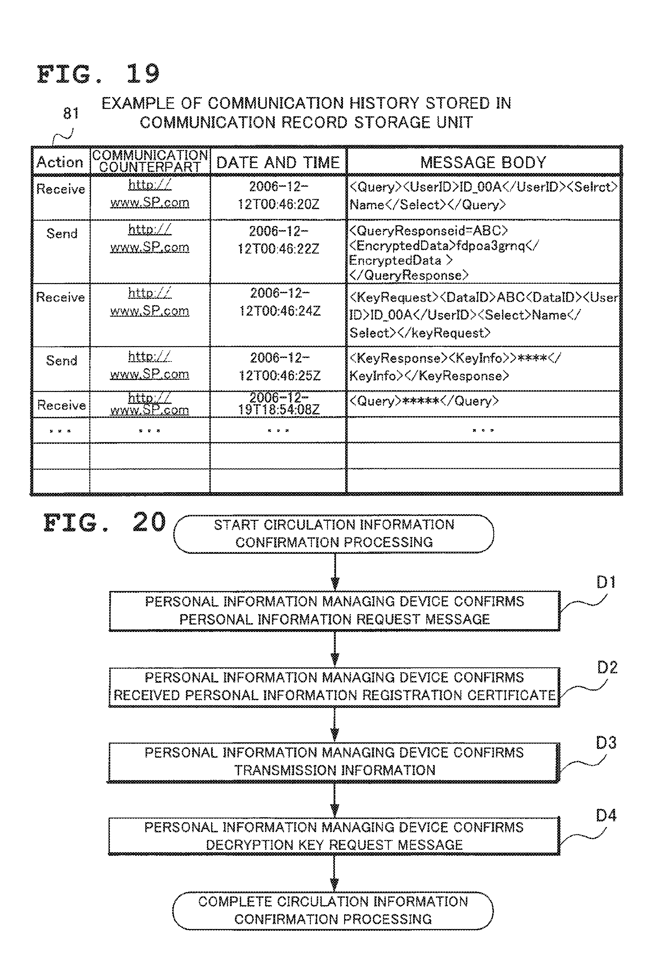

Here, an example of the communication history stored in the communication record storage unit 81 is shown in Fig. 19.

Referring to Fig. 19, for each date and time of communication, the communication history is stored, associating an action such as Receive and Send, a communication counterpart and a message body during the communication. There is no particular limit on the format of the message body.

The transmission information confirmation unit 82 confirms whether or not encrypted personal information sent by the personal information managing device 8 is correct information.

The communication record storage unit 91 stores the message transmitted or received by the service providing device 9.

The transmission information confirmation unit 92 confirms whether or not a personal information request message and a personal information registration certificate sent by the service providing device 9 are correct information.

### (OPERATION OF THE FOURTH EXEMPLARY EMBODIMENT)

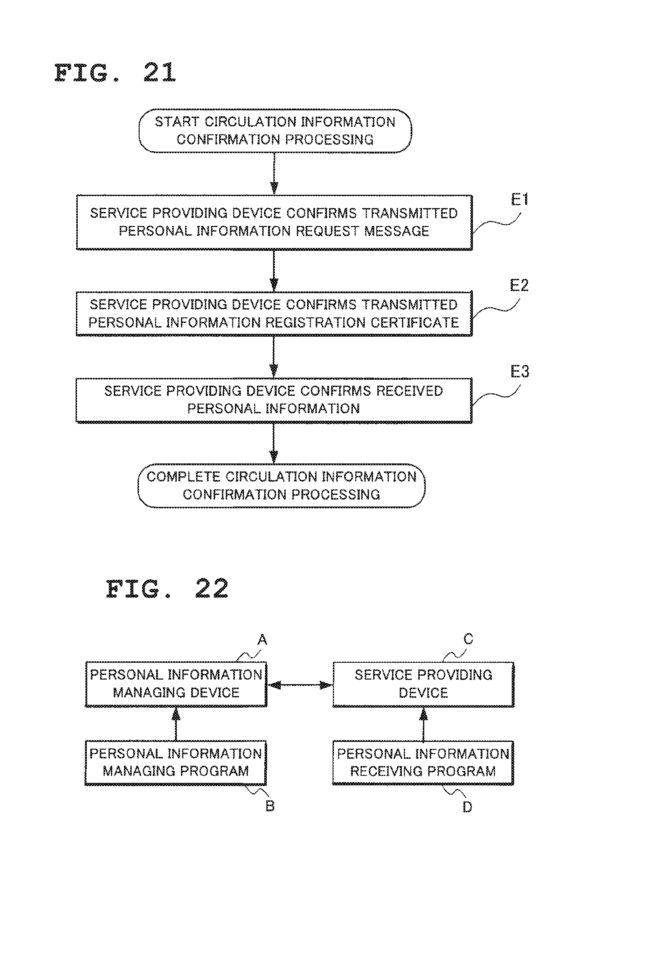

Next, the entire operation of the present exemplary embodiment will be described in detail with reference to Fig. 18 and flowcharts in Figs. 20 and 21.

When transmitting/receiving messages related to personal information, the personal information managing device 8 manages all the messages in the communication record storage unit 81. Similarly, when transmitting/receiving messages related to personal information, the service providing device 9 manages all the messages in the communication record storage unit 91.

Then, the personal information managing device 8 starts processing for confirming whether or not the circulation of personal information has been performed correctly with any timing. As initial processing therefor, the personal information managing device 8 acquires a personal information request message stored in the communication record storage unit 81, and uses the personal information request confirmation unit 12 to confirm the personal information request message (step D1). The confirmation processing at that time is processing of verifying an electronic signature attached to the personal information request message, or of confirming whether or not requested personal information is managed.

Next, the personal information managing device 8 uses the personal information registration certificate confirmation unit 43 to confirm the received personal information registration certificate managed by the communication record storage unit 81 (step D2). This confirmation processing is, for example, the processing of confirming the validity of the personal information registration certificate, such as verification of the signature on the personal information registration certificate.

Next, the personal information managing device 8 uses the transmission information confirmation unit 82 to confirm transmission information managed by the communication record storage unit 81 (step D3). This processing is, for example, the processing of confirming whether or not the transmission information has been encrypted, whether or not an electronic signature has been attached, and the like.

Next, the personal information managing device 8 uses the transmission information confirmation unit 82 to confirm a decryption key request message managed by the communication record storage unit 81 (step D4). This is the processing of verifying the electronic signature attached to the decryption key request message, or of confirming whether or not the personal information managing device 8 has actually sent the decryption key, for example.

On the other hand, in the confirmation processing in the service providing device 9, first, the transmission information confirmation unit 92 is used to confirm the transmitted personal information request message (step E1). The request message is managed by the communication record storage unit 91. Step E1 includes verification of a signature attached to the request message, for example.

Next, the service providing device 9 uses the transmission information confirmation unit 92 to confirm the personal information registration certificate transmitted to the personal information managing device 8 (step E2). The personal information registration certificate to be confirmed at that time is the personal information registration certificate registered with the communication record storage unit 91. Here, for example, whether or not the personal information registration certificate is valid is confirmed, based on the signature, the expiration date of the personal information registration certificate and the like.

Next, the service providing device 9 uses the personal information decryption unit 222 to confirm the received personal information (step E3). Here, for example, processing for verifying the signature on the received message, and processing for confirming the correspondence between the personal information registration certificate and the personal information are performed.

### (EFFECTS OF THE FOURTH EXEMPLARY EMBODIMENT)

Next, the effects of the present exemplary embodiment will be described.

In the exemplary embodiment of the present invention, the personal information managing device 8 and the service providing device 9, which handle personal information, can produce proof that the personal information has been correctly transmitted/received at any time. The reason is that the personal information managing device 8 and the service providing device 9, which handle personal information, manage all communication logs, thus allowing for confirmation using the communication logs with any timing as to which of personal information has been transmitted/received.

### (FIFTH EXEMPLARY EMBODIMENT)

Next, a fifth exemplary embodiment of the present invention will be described in detail with reference to the drawings.

Referring to Fig. 22, the fifth exemplary embodiment of the present invention comprises a personal information managing device A and a service providing device C, as in the first, second, third and fourth exemplary embodiments.

A personal information managing program B controls the operation of the personal information managing device A, and, in accordance with a request from the service providing device C, sends personal information and a decryption key to the service providing device fil, and issues a personal information registration certificate to acquire the personal information. Controlled by the personal information managing program B, the personal information managing device A performs the same processes as those performed by the personal information managing devices 1, 4, 6 and 8 in the first, second, third and fourth exemplary embodiments.

A personal information receiving program D controls the operation of the service providing device C to send the personal information request message to the personal information managing device A, and receive the personal information.

Controlled by the personal information receiving program D, the service providing device C performs the same processes as those performed by the service providing devices 2, 5, 7 and 9 in the first, second, third and fourth exemplary embodiments.

### (FIRAT EXAMPLE)

Next, the operation of an Example 1 of the present invention will be described using a concrete example.

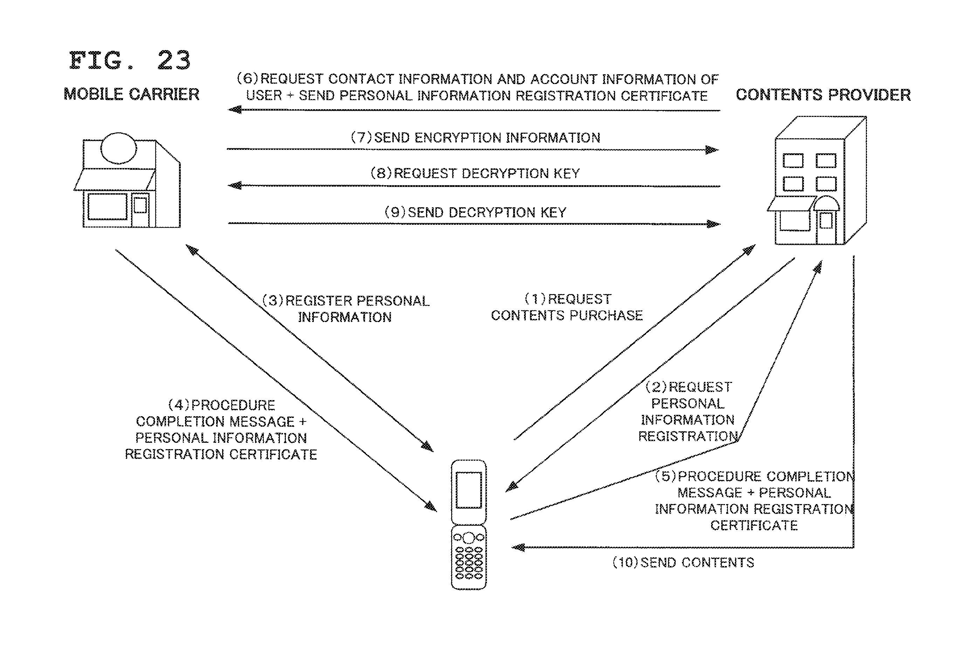

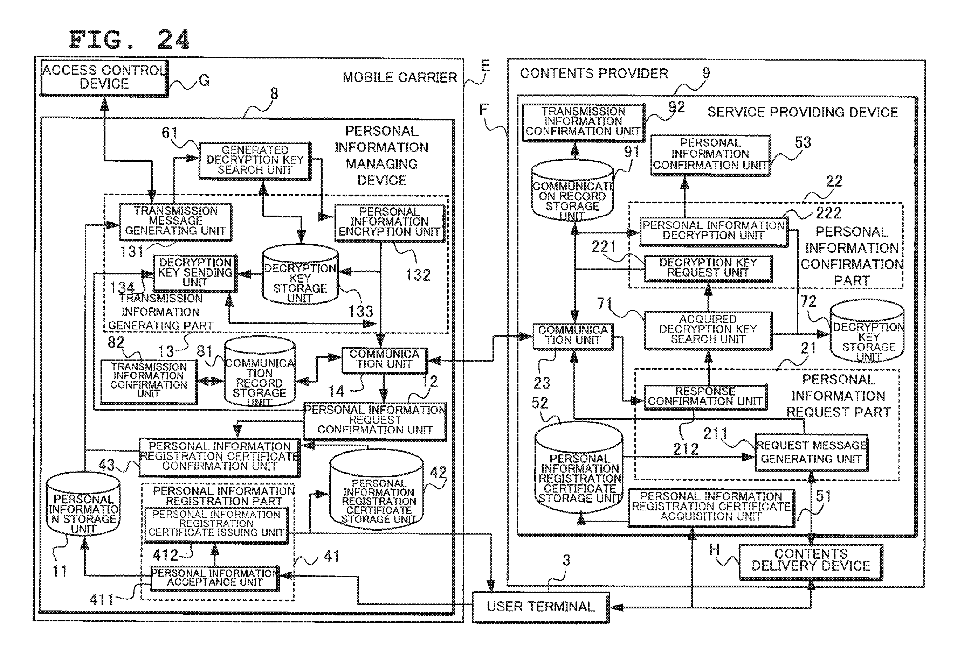

In one instance shown in Fig. 23, a mobile carrier (personal information managing device) manages the personal information of a user of a mobile phone (user terminal). A contents provider (service providing device) acquires the personal information from the mobile carrier, and provides contents to the mobile phone of the user. The personal information required by the contents provider is contact information (telephone number and address) and account information (charge card number and bank account number) of the user; not all information of the user has been registered with the mobile carrier. For convenience of explanation, the network 2000 is omitted in Figs. 23 and 24 (described later) .

In this situation, first, (1) in accordance with a request from the user, the mobile phone requests the purchase of contents from the contents provider.

At that time, since the contents provider has no personal information registration certificate for acquiring the personal information, (2) the contents provider requests the user of the mobile phone to register the personal information with the mobile carrier.

Then, (3) the mobile phone in which the personal information of the user is entered registers the personal information with the mobile carrier.

When the registration is completed, (4) the mobile phone acquires a personal information registration certificate for acquiring the personal information from the mobile carrier.

Next, (5) the personal information registration certificate is sent to the contents provider from the mobile phone.

Upon acquiring the personal information registration certificate, (6) the contents provider sends the personal information registration certificate and a personal information request message.

Upon receiving the request, (7) the mobile carrier sends the encrypted personal information to the contents provider.

Since the contents provider does not hold a decryption key for decrypting the encrypted information, (8) the contents provider sends a decryption key request message to the mobile carrier.

Then, the mobile carrier verifies the decryption key request, and (9) sends the decryption key.

Next, the contents provider decrypts the personal information, and (10) uses the personal information to send the contents to the mobile phone.

The configuration of the mobile carrier and the contents provider is shown in Fig. 24, for example.

The mobile carrier E comprises the personal information managing device 8 and an access control device G.

The access control device G is a device for determining whether or not the mobile carrier E is allowed to send the personal information to the contents provider F. Of the access control device G does not admit the transmission/reception of the personal information, the transmission message generating unit 131 does not acquire the personal information from the personal information storage unit 11, and does not generate a transmission message.

Further, the contents provider F comprises the service providing device 9 and a contents delivery device H.

The contents delivery device H is a device for selling contents to the user based on the personal information of the user. When the user requests the purchase of the contents, the user terminal 3 first accesses the contents delivery device H. The contents delivery device H requests the personal information from the request message generating unit 211 and acquires the personal information from the personal information confirmation unit 53. The contents delivery device H, which has acquired the personal information, delivers the contents to the user.

### (SECOND EXAMPLE)

Next, an Example 2 of the present invention will be described using a concrete example.

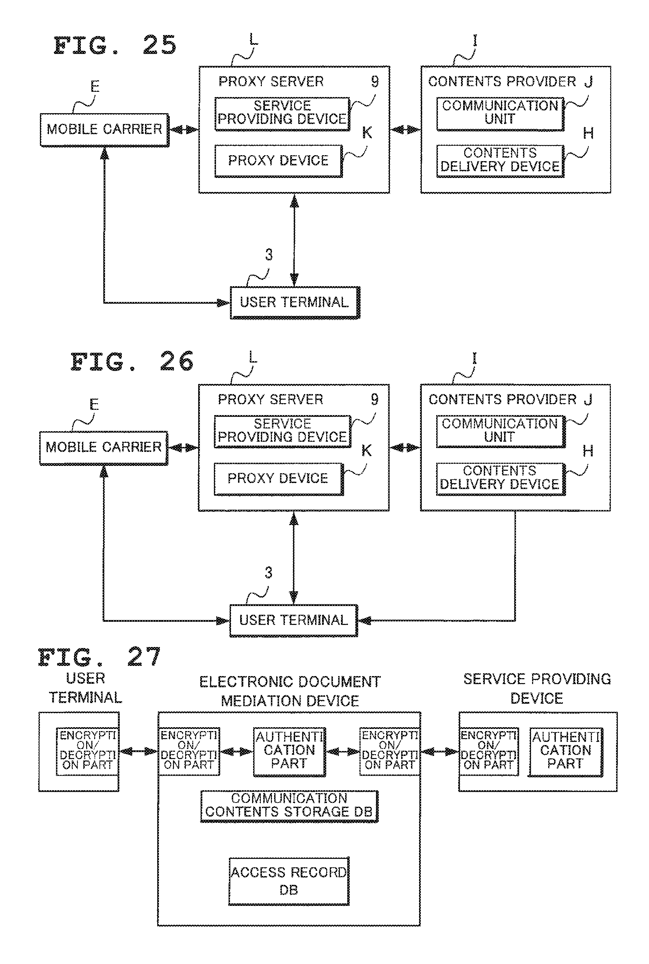

In one instance shown in Fig. 25, differing from the Example 1 shown in Fig. 24, a contents provider I comprises a communication unit J and the contents delivery device H, and a proxy server L, which comprises the service providing device 9 and a proxy device K, and is connected to the contents provider I, the mobile carrier E and the mobile phone (user terminal 3), acquires the personal information from the mobile carrier E, and provides the contents delivered from the contents provider I to the mobile phone of the user. As shown in Fig. 26, after the proxy server L acquired the personal information, the contents to be provided based on the personal information may be provided to the mobile phone of the user directly by the contents provider I without through the proxy server M. For convenience of explanation, the network 2000 is omitted in Figs, 25 and 26.

The outline of the configuration of a wireless communication system according to each exemplary embodiment described above will be described.

A first personal information checking system comprises a personal information managing device (Fig. 2-1) for acquiring personal information from a user terminal, and disclosing it to another device as necessary, and a service providing device (Fig. 2-2) for acquiring the personal information from the other device, wherein the personal information managing device for managing the personal information includes a unit for registering the personal information acquired from the user device of a user using service provided by the service providing device through a communication line, a unit for generating irreversible message information including the registered personal information, a unit for encrypting the message information, a unit for generating a decryption key for decrypting the encrypted message information, a unit for sending the encrypted message information to the service providing device in accordance with a request for the personal information from the service providing device, and a unit for sending the decryption key to the service providing device in accordance with a request for the decryption key of the message information received from the service providing device, and the service providing device for providing service to the user through the communication line includes a unit for sending the request for the personal information of the user to the personal information managing device for managing the personal information of the user, a unit for acquiring the irreversible message information including the personal information generated and encrypted by the personal information managing device from the personal information managing device, a unit for sending the request for the decryption key for decrypting the acquired and encrypted personal information to the personal information managing device, and a unit for acquiring the personal information for checking the user using the service by decrypting the encrypted message information based on the decryption key received from the personal information managing device.

The personal information managing device comprises a personal information storage unit (Fig. 2-11) for managing input personal information, a personal information request confirmation unit (Fig. 2-12) for analyzing a request for the personal information and a request for the decryption key transmitted by the other device, a transmission information generating part (Fig. 2-13) for generating a message including the personal information sent to the other device, and a communication unit (Fig. 2-14) for communicating with the other device, and the transmission information generating part comprises a transmission message generating unit (Fig. 2-131) for confirming the personal information to be sent, a personal information encryption unit (Fig. 2-132) for generating an encryption key for encrypting the personal information and a decryption key, and encrypting the personal information, a decryption key storage unit (Fig. 2-133) for registering the decryption key corresponding to the key used for encryption by the personal information encryption unit, and a decryption key sending unit (Fig. 2-134) for sending the decryption key to the other device.

The service providing device comprises a personal information request part (Fig. 2-21) for requesting the personal information, a personal information confirmation part (Fig. 2-22) for confirming the received personal information, and a communication unit (Fig, 7-23) for communicating with the other device. The personal information request part comprises a request message generating unit (Fig. 2-211) for generating a message to request the personal information from the personal information managing device and a response confirmation unit (Fig. 2-212) for confirming a response message corresponding to the request message, and the personal information confirmation part comprises a decryption key request unit (Fig. 2-221) for requesting the decryption key when the received personal information is encrypted, and a personal information decryption unit (Fig. 2-222) for decrypting the encrypted personal information.

With such a configuration being adopted, when the service providing device requests the personal information from the personal information managing device, and the personal information managing device accepts the request and sends the personal information, the personal information managing device encrypts and sends the personal information to the service providing device. The service providing device, which received the encrypted personal information, requests the decryption key from the personal information managing device. The personal information managing device, which received the decryption request, sends the decryption key to the personal information request device. Upon acquiring both the decryption key and the encrypted personal information, the personal information request device decrypts the personal information so that the personal information can be used. The personal information managing device and the service providing device cannot deny the transmission/reception of the personal information once they regard the message requesting the decryption key as a personal information acquisition confirmation message. The operation described above allows the first object of the present invention to be achieved.

Further, in a second personal information checking system, in addition to the configuration of the first personal information checking system, a personal information managing device (Fig. 9-4) comprises a personal information registration part (Fig. 9-41) for registering the personal information entered from a user terminal (Fig. 9-3), a personal information registration certificate storage unit (Fig. 9-42) for registering the personal information registration certificate, which is managed along with the personal information, and a personal information registration certificate confirmation unit (Fig. 9-43) for verifying the personal information registration certificate acquired from another device. The personal information registration part comprises a personal information acceptance unit (Fig. 9-411) for accepting the registration of the personal information, and a personal information registration certificate issuing unit (Fig. 9-412) for issuing the personal information registration certificate for managing the personal information. In the personal information registration certificate, information for acquiring the personal information is described, and not only information related to the personal information, but also information, which is uniquely generated from personal information, such as a one-way hash value generated from the personal information are included. In other words, a personal information registration certificate and personal information are associated with each other one to one, and, if the personal information managing device holds these two pieces of information, it can confirm the personal information corresponding to the personal information registration certificate. The personal information managing device discloses the personal information only to a device disclosing the personal information registration certificate.

Moreover, in addition to the service providing device having the configuration of the first personal information checking system, the service providing device (Fig. 9-5) comprises a personal information registration certificate acquisition unit (Fig. 9-51) for receiving the personal information registration certificate for acquiring the personal information, a personal information registration certificate storage unit (Fig. 9-52) for storing the personal information registration certificate, and a personal information verification unit (Fig. 9-53) for comparing the contents of the personal information registration certificate with the personal information to confirm that the personal information has not been falsified.

With such a configuration being adopted, when the user terminal registers the personal information with the personal information managing device, the user terminal enters the personal information into the personal information managing device, and the personal information managing device issues and sends the personal information registration certificate related to the personal information to the user terminal. Upon acquiring the personal information registration certificate, the user terminal verifies the contents of the personal information registration certificate. Further, the user terminal registers the personal information registration certificate with the service providing device in advance. On the other hand, when acquiring the personal information, the service providing device uses the personal information registration certificate to generate the request message for the personal information, and sends the personal information registration certificate and the request message for the personal information to the personal information managing device. Upon receiving the request message, the personal information managing device confirms the contents of the personal information registration certificate, and if the verification of the personal information registration certificate succeeds, sends the encrypted personal information to the service providing device. Upon receiving the encrypted personal information, the service providing device requests the decryption key from the personal information managing device to acquire the decryption key. Upon acquiring both the decryption key and the encrypted personal information, the service providing device uses the decryption key to decrypt the encrypted personal information, verifies the contents of the personal information, and uses the personal information. At that time, the electronic signature of the message generating device is attached to all messages exchanged between the personal information managing device and the service providing device. Verifying the contents of the personal information registration certificate by the user terminal allows the altering the personal information at the personal information managing device to be verified, and attaching the electronic signature of the personal information managing device to the personal information allows the altering the personal information at the service providing device to be verified. Moreover, the personal information managing device uses the request message for the decryption key as a confirmation message of acquiring the personal information, thereby preventing the service providing device from denying the reception of the personal information. The operation described above allows the first and second objects of the present invention to be achieved.

Additionally, in a third personal information checking system of the present invention, in addition to the configuration of the second personal information checking system, a personal information managing device (Fig. 15-6) comprises a generated decryption key search unit (Fig. 15-61) for searching as to whether or not the decryption key has been sent, and a service providing device (Fig. 15-7) comprises an acquired decryption key search unit (Fig. 15-71) for searching as to whether or not the decryption key has been received, and a decryption key storage device (Fig. 15-72) for storing the received decryption key. With such a configuration being adopted, when encrypting the personal information, the personal information managing device 6 searches for and reuses the encryption key, which has been used previously, and the service providing device 7 uses the decryption key to be stored in the decryption key storage device to decrypt the encrypted personal information. The third object of the present invention can be achieved not by requesting and acquiring the decryption key, but by reusing the decryption key, which has been acquired previously.

Further, in a fourth personal information checking system of the present invention, in addition to the configuration of the first, second and third personal information checking systems, a personal information managing device (Fig. 18-8) comprises a communication record storage unit (Fig. 18-81) for managing communication logs, and a transmission information confirmation unit (Fig. 18-82) for verifying a message sent by the personal information managing device preciously, and a service providing device (Fig. 18-9) comprises a communication record storage unit (Fig. 18-91) for managing the communication logs, and a transmission information confirmation unit (Fig. 18-92) for verifying a message sent by the service providing device previously. With such a configuration being adopted, the personal information managing device 8 and the service providing device 9 each manage the communication logs, and use the transmission information confirmation unit, personal information registration certificate confirmation unit, personal information request confirmation unit, and response confirmation unit to confirm the logs, thereby allowing the correctness of the circulation of the personal information to be confirmed with any timing, thus achieving the fourth object of the present invention.

According to each exemplary embodiment described above, the following effects can be achieved.

A first effect is that a personal information managing device can prevent a service providing device from denying the reception of personal information at a reduced communication load and at a lower cost.

The reason is that the service providing device always sends a reception confirmation message of the personal information to the personal information managing device, without requiring a third party for monitoring the circulation of personal information. Because the personal information transmitted/received between the devices is encrypted, the service providing device transmits a request for a decryption key after receiving the personal information. Since the request for the decryption key is regarded as the reception confirmation of the personal information, it can be confirmed that the transmission/reception of the personal information has been performed, which can prevent the service providing device from making a repudiation.

A second effect is that whether or not the personal information managing device has falsified the personal information acquired from a user terminal can be verified by the service providing device at a lower cost.

The reason is that the service providing device can compare the personal information registration certificate containing information related to the personal information acquired from the user terminal with the personal information acquired from the personal information managing device, without requiring a third party for monitoring the circulation of personal information. Since the service providing device acquires the personal information registration certificate for acquiring the personal information from the user terminal, the personal information registration certificate describes information related to correct personal information registered by the user terminal. On the other hand, the personal information acquired from the personal information managing device might have been falsified. By comparing information related to the correct personal information with the personal information acquired from the personal information managing device, whether or not the personal information has not been falsified can be confirmed.

A third effect is that transmission/reception of the personal information can be simplified when the personal information managing device and the service providing device have already transmitted/received the personal information.

The reason is that the personal information managing device and the service providing device store the contents transmitted/received previously. If the service providing device stores personal information itself, costs are incurred for managing personal information, therefore, only a decryption key for decrypting personal information is stored, not personal information. When encrypting the personal information, the personal information managing device also uses the same encryption key. In this manner, communication related to the transmission/reception of the decryption key can be reduced.

A fourth effect is that the personal information managing device and the service providing device can confirm that the personal information has been transmitted/received without being falsified, and the personal information has been transmitted/received without being repudiated with any timing at a lower cost.

The reason is that each device has means for storing all communication logs related to the transmission/reception of the personal information, and verifying the contents of the transmission/reception at any time, without requiring a third party for monitoring the circulation of personal information and for holding the personal information. The personal information managing device and the service providing device store all of the transmitted/received personal information and personal information registration certificates, and messages related to the transmission/reception of the decryption key. Thus, even if the transmission/reception of the personal information has been completed, the falsification and repudiation of the personal information can be verified at any time.

A fifth effect is that a fact that only correct personal information is transmitted/received can be insisted.

The reason is that when the personal information is transmitted/received, who transmitted/received what information to/from whom can be verified, without requiring a third party for monitoring the circulation of personal information. When the personal information is transmitted/received, falsification and repudiation can be prevented, therefore, the personal information managing device and the service providing device can confirm who sent what information to whom. Therefore, if unnecessary personal information has not been acquired, it can be proved.

A sixth effect is that service using personal information can be provided easily at a lower cost,

The reason is that personal information can be acquired safely, without requiring a third party for monitoring the circulation of personal information and for holding the personal information, and even if personal information is not managed by oneself. If the personal information is managed by oneself, management costs are incurred, and the risk of leakage of privacy has to be addressed. In addition, the Personal Information Protection Act has to be complied with. However, during the circulation of the personal information, the personal information managing device and the receiving device can confirm that correct information was transmitted/received, thus, the personal information can be acquired safely. Accordingly, if personal information is managed by another device, even if the personal information is not managed directly by oneself, service using personal information can be provided by transmission/reception of the personal information.

Although the present invention has been described in connection with preferred exemplary embodiments, the present invention is not necessarily limited to the exemplary embodiments described above, and various modifications may be made within the scope of the technical idea.

### INCORPORATION BY REFERENCE

The present application claims the benefit of the priority of Japanese Patent Application No. 2007-026663, filed on February 6, 2007, and the entire disclosure of which is incorporated herein.

### INDUSTRIAL APPLICABILITY

The present invention can be applied to a program for personal information management allowing for personal information entrusted contracts even in a situation in which there is no third party. Further, it can be applied to an application in which a business that manages personal information such as mobile carriers and ISPs provides personal information management service, without mediation through a third party, to a business which does not manage personal information. Additionally, it can be applied to an application in which when business such as a telephone center is outsourced, a trustor collectively manages personal information, and the outsourcer acquires and uses the personal information if required.

## Claims

1. A personal information managing device, comprising:
a unit for registering personal information acquired from a user device of a user using service provided by a service providing device through a communication line;
a unit for generating irreversible message information containing said personal information registered;
a unit for encrypting said message information;
a unit for generating a decryption key for decrypting said message information encrypted;
a unit for sending said message information encrypted, to said service providing device in accordance with a request for the personal information from said service providing device; and
a unit for sending the decryption key to said service providing device in accordance with a request for the decryption key of said message information received from said service providing device,

2. The personal information managing device according to claim 1, further comprising
a personal information registration certificate information issuing unit for issuing personal information registration certificate information, which uniquely corresponds to said personal information registered, and indicates that said personal information has been registered, wherein
along with said personal information request from said service providing device, when said personal information registration certificate information uniquely corresponding to the requested personal information can be confirmed, personal information corresponding to said registration information is encrypted and transmitted to said service providing device.

3. The personal information managing device according to claim 1 or claim 2, further comprising
a generated decryption key search unit for searching for the decryption key, which has already been generated and stored by said personal information managing device itself.

4. The personal information managing device according to any one of claim 1 to claim 3, further comprising:
a communication record storage unit for recording a communication log related to said transmission/reception; and
a reception information confirmation unit for verifying the contents of a request and information received from said service providing device.

5. The personal information managing device according to any one of claim 1 to claim 4, wherein an electronic signature of said personal information managing device itself is attached to said personal information registration certificate information and said encrypted personal information to be transmitted to said service providing device and said user device.

6. A service providing device for providing service to a user through a communication line, comprising:
a unit for sending a request for personal information of said user to a personal information managing device for managing personal information of said user;
a unit for acquiring from said personal information managing device, irreversible message information, which is generated by said personal information managing device, and includes said personal information encrypted;
a unit for sending a request for a decryption key for decrypting said encrypted personal information acquired, to said personal information managing device; and
a unit for acquiring said personal information for checking said user using service by decrypting said message information encrypted, based on the decryption key received from said personal information managing device.

7. The service providing device according to claim 6, wherein
transmitting to said personal information managing device, along with said personal information request, said personal information registration certificate information uniquely corresponding to each personal information, and indicating that said personal information has been registered with said personal information managing device.

8. The service providing device according to claim 6 or claim 7, further comprising:
a decryption key storage unit for managing an acquired decryption key; and
an acquired decryption key search unit for searching in said decryption key storage unit to acquire the decryption key.

9. The service providing device according to any one of claim 6 to claim 8, further comprising:
a communication record storage unit for recording a communication log related to said transmission/reception; and
a reception information confirmation unit for verifying the contents of information received from said personal information managing device.

10. The service providing device according to any one of claim 7 to claim 9, wherein an electronic signature of said service providing device itself is attached to said personal information registration certificate information to be transmitted to said personal information managing device.

11. The service providing device according to any one of claim 6 to claim 10, wherein an electronic signature of said service providing device itself is attached to said personal information request to be transmitted to said personal information managing device.

12. A program implemented in a computer, and executed on a personal information managing device for managing personal information, causing
said computer to perform:
processing of registering personal information acquired from a user device of a user using service provided by a service providing device through a communication line;
processing of generating irreversible message information containing said personal information registered;
processing of encrypting said message information;
processing of generating a decryption key for decrypting said message information encrypted;
processing of sending said message information encrypted, to said service providing device in accordance with a request for the personal information from said service providing device; and
processing of sending the decryption key to said service providing device in accordance with a request for the decryption key of said message information received from said service providing device.

13. The program according to claim 12, further causing
said computer to perform:
personal information registration certificate information issuing processing of issuing personal information registration certificate information, which uniquely corresponds to said personal information registered, and indicates that said personal information has been registered; and
processing of encrypting and transmitting personal information corresponding to said registration information to said service providing device when said personal information registration certificate information uniquely corresponding to the requested personal information can be confirmed along with said personal information request from said service providing device.

14. The program according to claim 12 or claim 13, further causing
said computer to perform:
generated decryption key search processing of searching for the decryption key, which has already been generated and stored by said personal information managing device itself.

15. The program according to any one of claim 12 to claim 14, further causing
said computer to perform:
communication record storage processing of recording a communication log related to said transmission/reception; and
reception information confirmation processing of verifying the contents of a request and information received from said service providing device.

16. The program according to any one of claim 12 to claim 15, further causing
said computer to perform:
processing of attaching an electronic signature of said personal information managing device itself to said personal information registration certificate information and said encrypted personal information to be transmitted to said service providing device and said user device.

17. A program implemented in a computer, and executed on a service providing device for providing service to a user through a communication line, causing
said computer to perform:
processing of sending a request for personal information of said user to a personal information managing device for managing personal information of said user;
processing of acquiring from said personal information managing device, irreversible message information, which is generated by said personal information managing device, and includes said personal information encrypted;
processing of sending a request for a decryption key for decrypting said encrypted personal information acquired, to said personal information managing device; and
processing of acquiring said personal information for checking said user using service by decrypting said message information encrypted, based on the decryption key received from said personal information managing device.

18. The program according to claim 17, further causing
said computer to perform:
processing of transmitting to said personal information managing device, along with said personal information request, said personal information registration certificate information uniquely corresponding to each personal information, and indicating that the personal information has been registered with said personal information managing device.

19. The program according to claim 17 or claim 18, further causing
said computer to perform:
decryption key storage processing of storing an acquired decryption key in a decryption key storage unit; and
acquired decryption key search processing of searching in said decryption key storage unit to acquire the decryption key.

20. The program according to any one of claim 17 to claim 19, further causing
said computer to perform:
communication record storage processing of recording a communication log related to said transmission/reception; and
reception information confirmation processing of verifying the contents of information received from said personal information managing device.

21. The program according to any one of claim 18 to claim 20, further causing
said computer to perform:
processing of attaching an electronic signature of said service providing device itself to said personal information registration certificate information to be transmitted to said personal information managing device.

22. The program according to any one of claim 17 to claim 21, further causing
said computer to perform:
processing of attaching an electronic signature of said service providing device itself to said personal information request to be transmitted to said personal information managing device.

23. A personal information managing method for managing personal information on a personal information managing device, comprising:
a step of registering personal information acquired from a user device of a user using service provided by a service providing device through a communication line;
a step of generating irreversible message information containing said personal information registered;
a step of encrypting said message information;
a step of generating a decryption key for decrypting said message information encrypted;
a step of sending said message information encrypted, to said service providing device in accordance with a request for the personal information from said service providing device; and
a step of sending the decryption key to said service providing device in accordance with a request for the decryption key of said message information received from said service providing device.

24. The personal information managing method according to claim 23, further comprising:
a personal information registration certificate information issuing step of issuing personal information registration certificate information, which uniquely corresponds to said personal information registered, and indicates that the personal information has been registered; and
a step of encrypting and transmitting personal information corresponding to said registration information to said service providing device when said personal information registration certificate information uniquely corresponding to the requested personal information can be confirmed along with said personal information request from said service providing device.

25. The personal information managing method according to claim 23 or claim 24, further comprising a generated decryption key search step of searching for the decryption key, which has already been generated and stored by said personal information managing device itself.

26. The personal information managing method according to any one of claim 23 to claim 25, further comprising:
a communication record storage step of recording a communication log related to said transmission/reception; and
a reception information confirmation step of verifying the contents of a request and information received from said service providing device.

27. The personal information managing method according to any one of claim 23 to claim 26, further comprising a step of attaching an electronic signature of said personal information managing device itself to said personal information registration certificate information and said encrypted personal information to be transmitted to said service providing device and said user device.

28. A checking method of personal information of a user executed on a service providing device for providing service to said user through a communication line, comprising:
a step of sending a request for personal information of said user to a personal information managing device for managing personal information of said user;
a step of acquiring from said personal information managing device, irreversible message information, which is generated by said personal information managing device, and includes said personal information encrypted;
a step of sending a request for a decryption key for decrypting said encrypted personal information acquired, to said personal information managing device; and
a step of acquiring said personal information for checking said user using service by decrypting said message information encrypted, based on the decryption key received from said personal information managing device.

29. The checking method according to claim 28, further comprising a step of transmitting to said personal information managing device, along with said personal information request, said personal information registration certificate information uniquely corresponding to each personal information, and indicating that the personal information has been registered with said personal information managing device.

30. The checking method according to claim 28 or claim 29, further comprising:
a decryption key storage step of storing an acquired decryption key in a decryption key storage unit; and
an acquired decryption key search step of searching in said decryption key storage unit to acquire the decryption key.

31. The checking method according to any one of claim 28 to claim 30, further comprising:
a communication record storage step of recording a communication log related to said transmission/reception; and
a reception information confirmation step of verifying the contents of information received from said personal information managing device.

32. The checking method according to any one of claim 29 to claim 31, further comprising a step of attaching an electronic signature of said service providing device itself to said personal information registration certificate information to be transmitted to said personal information managing device.

33. The checking method according to any one of claim 28 to claim 32, further comprising a step of attaching an electronic signature of said service providing device itself to said personal information request to be transmitted to said personal information managing device.

34. A checking method, wherein
a personal information managing device for managing personal information, comprising:
a step of registering personal information acquired from a user device of a user using service provided by a service providing device through a communication line;
a step of generating irreversible message information containing said personal information registered;
a step of encrypting said message information;
a step of generating a decryption key for decrypting said message information encrypted;;
a step of sending said message information encrypted, to said service providing device in accordance with a request for the personal information from said service providing device; and
a step of sending said decryption key to said service providing device in accordance with a request for the decryption key of said message information received from said service providing device, and
a service providing device for providing service to a user through a communication line, comprising:
a step of sending a request for personal information of said user to a personal information managing device for managing personal information of said user;
a step of acquiring from said personal information managing device, irreversible message information, which is generated by said personal information managing device, and includes said personal information encrypted;
a step of sending a request for a decryption key for decrypting said encrypted personal information acquired, to said personal information managing device; and
a step of acquiring said personal information for checking said user using service by decrypting said message information encrypted, based on the decryption key received from said personal information managing device.

35. The checking method according to claim 34, wherein said personal information managing device, comprising:
a personal information registration certificate information issuing step of issuing personal information registration certificate information, which uniquely corresponds to said personal information registered, and indicates that said personal information has been registered; and
a step of encrypting and transmitting personal information corresponding to said registration information to said service providing device when said personal information registration certificate information uniquely corresponding to the requested personal information can be confirmed along with said personal information request from said service providing device, and
said service providing device comprising:
a step of transmitting, along with said personal information request, said personal information registration certificate information indicating that said personal information has been registered with said personal information managing device, to said personal information managing device.

36. The checking method according to claim 34 or claim 35, wherein said personal information managing device, comprising:
a communication record storage step of recording a communication log related to said transmission/reception; and
a reception information confirmation step of verifying the contents of a request and information received from said service providing device, and
said service providing device, comprising:
a communication record storage step of recording a communication log related to said transmission/reception; and
a reception information confirmation step of verifying the contents of information received from said personal information managing device.

37. The checking method according to claim 35 or claim 36, wherein said personal information managing device, comprising:
a step of attaching an electronic signature of said personal information managing device itself to said personal information registration certificate information and said encrypted personal information to be transmitted to said service providing device and said user device, and
said service providing device, comprising:
a step of attaching an electronic signature of said service providing device itself to said personal information request or said personal information registration certificate information to be transmitted to said personal information managing device.

38. A personal information checking system, comprising:
a personal information managing device for managing personal information; and
a service providing device for providing service to a user through a communication line; wherein
said personal information managing device comprising:
a unit for registering personal information acquired from a user device of a user using service provided by a service providing device through a communication line;
a unit for generating irreversible message information containing said personal information registered;
a unit for encrypting said message information;
a unit for generating a decryption key for decrypting said message information encrypted;
a unit for sending said message information encrypted, to said service providing device in accordance with a request for the personal information from said service providing device; and
a unit for sending the decryption key to said service providing device in accordance with a request for the decryption key of said message information received from said service providing device, wherein
said service providing device comprising:
a unit for sending a request for personal information of said user to a personal information managing device for managing personal information of said user;
a unit for acquiring from said personal information managing device, irreversible message information, which is generated by said personal information managing device, and includes said personal information encrypted;
a unit for sending a request for a decryption key for decrypting said encrypted personal information acquired, to said personal information managing device; and
a unit for acquiring said personal information for checking said user using service by decrypting said message information encrypted, based on the decryption key received from said personal information managing device.

39. The personal information checking system according to claim 38, wherein
said personal information managing device comprising:
a personal information registration certificate information issuing unit for issuing personal information registration certificate information, which uniquely corresponds to said personal information registered, and indicates that said personal information has been registered; and
a unit for encrypting and transmitting personal information corresponding to said registration information to said service providing device when said personal information registration certificate information uniquely corresponding to the requested personal information can be confirmed along with said personal information request from said service providing device, wherein
said service providing device comprising:
a unit for transmitting, along with said personal information request, said personal information registration certificate information indicating that said personal information has been registered with said personal information managing device, to said personal information managing device.

40. The personal information checking system according to claim 38 or claim 39, wherein
said personal information managing device comprising:
a communication record storage unit for recording a communication log related to said transmission/reception; and
a reception information confirmation unit for verifying the contents of a request and information received from said service providing device, wherein
said service providing device comprising:
a communication record storage unit for recording a communication log related to said transmission/reception; and
a reception information confirmation unit for verifying the contents of information received from said personal information managing device.

41. The personal information checking system according to claim 39 or claim 40, wherein
said personal information managing device comprising:
a unit for attaching an electronic signature of said personal information managing device itself to said personal information registration certificate information and said encrypted personal information to be transmitted to said service providing device and said user device, wherein
said service providing device comprising:
a unit for attaching an electronic signature of said service providing device itself to said personal information request or said personal information registration certificate information to be transmitted to said personal information managing device.
